(11) **EP 3 980 751 B1**

(12) **FASCICULE DE BREVET EUROPEEN**

(45) Date de publication et mention
de la délivrance du brevet:
**26.07.2023 Bulletin 2023/30**

(21) Numéro de dépôt: **20732151.4**

(22) Date de dépôt: **04.06.2020**

(51) Classification Internationale des Brevets (IPC):
**G01N 21/359** *(2014.01)*      **G01N 21/31** *(2006.01)*
**G01N 21/41** *(2006.01)*      **G01N 21/59** *(2006.01)*

(52) Classification Coopérative des Brevets (CPC):
**G01N 21/253;** G01N 21/359; G01N 2021/3137;
G01N 2021/3196; G01N 2021/4126;
G01N 2021/438; G01N 2021/5957

(86) Numéro de dépôt international:
**PCT/EP2020/065484**

(87) Numéro de publication internationale:
**WO 2020/245272 (10.12.2020 Gazette 2020/50)**

(54) **PROCÉDÉ ET DISPOSITIF D'ANALYSE D'UN ÉCHANTILLON, METTANT EN OEUVRE UN SUPPORT RÉSONANT**

VERFAHREN UND VORRICHTUNG ZUR ANALYSE EINER PROBE UNTER VERWENDUNG EINES RESONANZTRÄGERS

METHOD AND DEVICE FOR ANALYSING A SAMPLE, IMPLEMENTING A RESONANT SUPPORT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.06.2019 FR 1906132**

(43) Date de publication de la demande:
**13.04.2022 Bulletin 2022/15**

(73) Titulaires:
- **Centre national de la recherche scientifique
  75016 Paris (FR)**
- **CPE Lyon Formation Continue et Recherche
  69100 Villeurbanne (FR)**
- **Ecole Centrale de Lyon
  69134 Ecully Cedex (FR)**
- **Institut National des Sciences Appliquees
  de Lyon (Insa Lyon)
  69100 Villeurbanne (FR)**
- **Université Claude Bernard Lyon 1
  69100 Villeurbanne (FR)**
- **Avalun
  38000 Grenoble (FR)**
- **COMMISSARIAT À L'ÉNERGIE ATOMIQUE ET
  AUX
  ÉNERGIES ALTERNATIVES
  75015 Paris (FR)**

(72) Inventeurs:
- **DUPOY, Mathieu
  38054 GRENOBLE Cedex 9 (FR)**
- **BENYATTOU, Taha
  69390 VOURLES (FR)**
- **BERGUIGA, Lotfi
  69007 LYON (FR)**
- **FEDELI, Jean-Marc
  38054 GRENOBLE Cedex 9 (FR)**
- **FOURNIER, Maryse
  38054 GRENOBLE Cedex 9 (FR)**
- **GAIGNEBET, Nicolas
  84240 La Tour d'Aigues (FR)**
- **JAMOIS, Cécile
  69300 CALUIRE (FR)**
- **POUTEAU, Patrick
  38240 MEYLAN (FR)**

(74) Mandataire: **INNOV-GROUP
310, avenue Berthelot
69372 Lyon Cedex 08 (FR)**

(56) Documents cités:
**EP-A1- 3 147 646      US-A1- 2004 155 309**

EP 3 980 751 B1

**(Cont. page suivante)**

- **BOUGOT-ROBIN K ET AL: "A multispectral resonant waveguide nanopatterned chip for robust oil quality monitoring", SENSORS AND ACTUATORS B: CHEMICAL, vol. 216, 15 avril 2015 (2015-04-15), pages 221-228, XP029243348, ISSN: 0925-4005, DOI: 10.1016/J.SNB.2015.03.087**
- **CHENG F ET AL: "Tuning asymmetry parameter of Fano resonance of spoof surface plasmons by modes coupling", APPLIED PHYSICS LETTERS, A I P PUBLISHING LLC, US, vol. 100, no. 13, 26 mars 2012 (2012-03-26), pages 131110-131110, XP012155359, ISSN: 0003-6951, DOI: 10.1063/1.3698117 [extrait le 2012-03-27]**
- **NAZIRIZADEH Y ET AL: "Low-cost label-free biosensors using photonic crystals embedded between crossed polarizers", OPTICS EXPRESS, OSA PUBLISHING, US, vol. 18, no. 18, 30 août 2010 (2010-08-30) , pages 19120-19128, XP002635685, ISSN: 1094-4087, DOI: 10.1364/OE.18.019120 [extrait le 2010-08-25]**

**Description**

**DOMAINE TECHNIQUE**

Le domaine technique de l'invention est l'analyse d'un échantillon, l'échantillon étant déposé sur un support comportant des cristaux photoniques dont les propriétés spectrales de transmission ou de réflexion comportent une longueur d'onde de résonance, cette dernière subissant une variation sous l'effet de la présence d'un analyte.

**ART ANTERIEUR**

La détection de la présence d'un analyte, et la détermination de sa concentration dans un échantillon, sont des opérations usuellement réalisées par des dosages chimiques ou des méthodes biologiques destructives. De nombreuses méthodes de laboratoire existent, parmi lesquelles, dans le domaine de la biologie, l'amplification de séquences par PCR (Polymerase Chain reaction) ou les techniques de séquençage du génome. Ces techniques sont actuellement maîtrisées, mais nécessitent du matériel coûteux et du personnel qualifié.

Des procédés d'analyse, mettant en oeuvre des techniques optiques, ont été développés, basés par exemple des échantillons placés très proches de capteurs d'image, par exemple par imagerie sans lentille. Dans le brevet US13,905,727, on décrit un procédé de quantification d'un analyte par une détection d'agglomérats formés dans un échantillon. Dans WO2016151249, ou dans WO2018060589, on a décrit le recours à des algorithmes de propagation holographique pour identifier des particules présentes dans un échantillon. Le document US20170082975 décrit un dispositif comportant un substrat destiné à être appliqué au contact d'un échantillon à analyser. Le substrat comporte des cristaux photoniques mono ou bidimensionnels, permettant une observation de particules présentes dans un échantillon.

La publication Cetin "Handheld high-throughput plasmonic biosensor using computational on-chip imaging", décrit un dispositif d'analyse d'un échantillon destiné à l'aide au diagnostic médical. Le dispositif comporte un support d'échantillon, apte à capter des analytes, propice à la formation d'une résonance de type plasmons de surface. Un capteur d'image, disposé selon une configuration d'imagerie sans lentille, permet d'acquérir une figure de diffraction représentative des structures plasmoniques formées dans le support. L'application d'un algorithme de reconstruction holographique permet d'identifier les analytes captés par le support, et de déterminer leur concentration. Un tel procédé nécessite l'application d'algorithmes de reconstruction holographiques, qui peuvent parfois être complexes à mettre en oeuvre et peuvent être entachés d'un bruit de reconstruction important.

La demande de brevet WO02/059602 décrit un dispositif d'analyse d'un échantillon, comportant une surface nanostructurée, configurée pour réfléchir une lumière vers un capteur. La surface nanostructurée est configurée pour capturer un analyte. En fonction de la longueur d'onde de la lumière réfléchie, on peut déterminer le type d'analyte lié à la surface de capture. Un spectromètre permet de détecter la longueur d'onde de la lumière réfléchie, ce qui donne une indication quant à la présence de l'analyte sur la surface de capture.

La publication Bougot-Robin K et al « A multispectral résonant waveguide nanopatterned chip for robust oil quality monitoring », sensors and actuators B : chemical, vol. 216, 2015-04-15, pp 221-228, décrit le recours à des cristaux photoniques pour analyser de l'huile.

Le document US2004/155309 décrit le recours à des structures métalliques induisant une résonance plasmon, pour l'analyse d'échantillons.

Le document Cheng F. et al « Tuning asymmetry parameter of Fano résonance of spoof surface plasmons by modes coupling », Applied Physics Letters, vol 100, n° 3, 2012-03-26 décrit des structures métalliques induisant une résonance plasmon. Chaque structure est constituée de deux motifs décalés l'un par rapport à l'autre, le décalage étant fixe.

Les inventeurs ont conçu un dispositif d'analyse simple d'utilisation, ne nécessitant pas d'instrumentation complexe, tel qu'un spectromètre. Le dispositif permet une analyse rapide quant à la présence ainsi qu'à une quantité d'analytes présents dans un échantillon.

**EXPOSE DE L'INVENTION**

Un premier objet de l'invention est un procédé d'analyse d'un échantillon tel qu'il est défini dans la revendication 7, l'échantillon s'étendant sur un support résonant, le support résonant comportant une surface sur laquelle s'étendent plusieurs cristaux photoniques, séparés les uns des autres, les cristaux photoniques étant tels que :

- au moins deux cristaux photoniques sont configurés pour être en contact avec un même analyte, lesdits cristaux photoniques adressant ainsi l'analyte ;
- une longueur d'onde de résonance est associée à chaque cristal photonique adressant l'analyte, la longueur d'onde de résonance variant en fonction d'une quantité d'analyte au contact de chaque cristal photonique, les longueurs d'onde de résonance des cristaux photoniques définissant une bande spectrale de résonance, s'étendant entre 200 nm et 1500 nm;

- la transmission ou la réflexion de la lumière, par chaque cristal photonique adressant l'analyte, est maximale à la longueur d'onde de résonance qui lui est associée ;

le procédé comportant les étapes suivantes :

a) illumination du support résonant par une source de lumière, dans une bande spectrale d'illumination recouvrant au moins en partie la bande spectrale de résonance, de telle sorte que plusieurs cristaux photoniques adressant l'analyte sont simultanément illuminés, l'illumination étant telle que l'intensité d'illumination est variable, dans la bande spectrale de résonance, selon une fonction spectrale d'illumination;

b) acquisition d'une image du support résonant, dite image de mesure, par un capteur d'image, l'image comportant des régions d'intérêt différentes, chaque région d'intérêt étant optiquement couplée à un cristal photonique adressant l'analyte, de telle sorte que chaque région d'intérêt représente une intensité transmise ou réfléchie par chaque cristal photonique lors de l'illumination du support résonant;

c) prise en compte d'une image de référence, l'image de référence étant représentative d'une image acquise par le capteur d'image, lorsque le support résonant est illuminé dans la bande spectrale d'illumination, dans une configuration de référence, par exemple en l'absence d'analyte ;

d) comparaison de l'image de mesure, acquise lors de l'étape b) avec l'image de référence, prise en compte lors de l'étape c);

e) en fonction de la comparaison, détermination de la présence de l'analyte dans l'échantillon.

Deux régions d'intérêt différentes sont optiquement couplées à deux cristaux photoniques différents. Chaque région d'intérêt de l'image correspond à un pixel ou un groupe de pixels du capteur d'image, le groupe de pixel étant optiquement couplé à un cristal photonique.

Par en l'absence d'analyte, il est entendu en l'absence d'analyte en contact avec le support résonant.

Selon une variante, l'image de référence est représentative d'une image acquise par le capteur d'image, lorsque le support résonant est illuminé dans la bande spectrale d'illumination, dans une configuration de référence, en présence d'une quantité connue d'analyte dans l'échantillon. Selon un mode de réalisation, plusieurs cristaux photoniques sont alignés selon une ligne parallèlement à un axe longitudinal, de telle sorte que la longueur d'onde de résonance respectivement associée à un cristal photonique augmente, ou diminue, progressivement le long de l'axe longitudinal. Le support résonant peut comporter différentes lignes de cristaux photoniques parallèles les unes aux autres. Les cristaux photoniques peuvent former des colonnes, parallèlement à un axe latéral de telle sorte que les cristaux photoniques d'une même colonne présentent une même longueur d'onde de résonance.

De préférence, les cristaux photoniques s'étendent selon un plan de support, l'onde lumineuse d'illumination se propage jusqu'au support résonant parallèlement à un axe de propagation perpendiculaire ou sensiblement perpendiculaire au plan de support.

Le procédé peut comporter, préalablement à l'étape a), une étape de formation de l'image de référence, comportant :

- illumination du support résonant par la source de lumière, dans la bande spectrale d'illumination;
- acquisition d'une image du support résonant par le capteur d'image, l'image ainsi acquise formant l'image de référence, la quantité d'analyte au contact du support résonant étant considérée comme nulle.

Selon un mode de réalisation, l'image référence est une image obtenue en :

- illuminant, selon la bande spectrale d'illumination, un support de référence, considéré comme représentatif du support résonant illuminé dans l'étape a), la quantité d'analyte au contact du support de référence étant considérée comme nulle ;
- formant une image du support de référence, l'image ainsi formée correspondant à l'image de référence.

Le support résonant peut comporter des cristaux photoniques de référence, considérés comme n'étant pas en contact avec l'analyte ; l'image de référence peut alors être une image des cristaux photoniques de référence lorsqu'ils sont illuminés selon la bande spectrale d'illumination.

L'image de référence et l'image de mesure forment deux parties distinctes d'une même image acquise par le capteur d'image.

Pour chaque cristal photonique adressant l'analyte, la longueur d'onde de résonance dépend d'un indice de réfraction de l'échantillon, au niveau d'une interface entre l'échantillon et le cristal photonique, l'indice de réfraction variant en fonction de la quantité d'analyte au contact du cristal photonique.

L'étape e) peut comporter les sous-étapes suivantes :

i) à partir de l'image de mesure détermination d'un profil, dit profil de mesure, de l'intensité des régions d'intérêt associées à l'analyte ;

ii) à partir de l'image de référence, détermination d'un profil, dit profil de référence, représentatif de l'intensité, en l'absence d'analyte ou en présence d'une quantité connue d'analyte dans l'échantillon, des régions d'intérêt associées à l'analyte ;

de telle sorte que la présence de l'analyte est déterminée en fonction d'une variation du profil de mesure par rapport au profil de référence.

L'étape e) peut comporter les sous-étapes suivantes :

i) sur l'image de mesure, détermination d'une position, dite position de mesure, d'une région d'intérêt présentant une valeur d'intensité maximale parmi les régions d'intérêt associées à l'analyte ;

ii) sur l'image de référence, détermination d'une position, dite position de référence, d'une région d'intérêt présentant une valeur d'intensité maximale parmi les régions d'intérêt associées à l'analyte ;

de telle sorte que la présence de l'analyte est déterminée en fonction d'une variation de la position de mesure par rapport à la position de référence.

L'étape e) peut comporter une estimation d'une quantité d'analyte dans l'échantillon, en fonction de la comparaison entre l'image de mesure et de l'image de référence.

La quantité d'analyte peut être estimée en fonction :

- d'une variation du profil de mesure par rapport au profil de référence ;
- ou d'une variation de la position de mesure par rapport à la position de référence.

Selon l'invention :

- chaque cristal photonique comporte des trous ménagés à travers une couche mince, les trous étant remplis par l'échantillon ;
- la longueur d'onde de résonance de chaque cristal photonique dépend du rayon ou de la diagonale des trous, et de l'espacement entre les trous, ainsi que de l'indice de réfraction de l'échantillon.

Chaque cristal photonique comporte :

- des premiers trous ayant une première dimension, la première dimension étant un rayon ou une diagonale, les premiers trous définissant un premier motif périodique;
- des deuxièmes trous, ayant une deuxième dimension, la deuxième dimension étant strictement inférieure à la première dimension, les deuxièmes trous définissant un deuxième motif périodique ;
- le deuxième motif et le premier motif sont décalés l'un par rapport à l'autre, parallèlement à la surface du support résonant, selon un décalage spatial;

de telle sorte que la longueur d'onde de résonance associée à chaque cristal photonique dépend de la première dimension, de la deuxième dimension, et du décalage spatial.

Selon un mode de réalisation,

- les cristaux photoniques, adressant un même analyte, sont alignés parallèlement à un axe longitudinal;
- les longueurs d'onde de résonance respectivement associées à deux cristaux photoniques adjacents sont décalées selon un pas de discrétisation compris entre 1 nm et 10 nm ou entre 1 nm et 50 nm.

Selon un mode de réalisation, les cristaux photoniques, adressant à un même analyte, sont recouverts d'une couche de fonctionnalisation, propice à une capture sélective, par exemple par greffage, de l'analyte sur les cristaux photoniques.

Selon un mode de réalisation, le support résonant comporte :

- des cristaux photoniques de rang 1, configurés pour capturer un premier analyte ;
- des cristaux photoniques de rang j, configurés pour capturer un $j^{ième}$ analyte, différent des analytes de rang inférieur à j.

Selon un mode de réalisation,

- les cristaux photoniques de même rang sont alignés parallèlement à un axe longitudinal;
- les cristaux photoniques présentent une même longueur d'onde de résonance, en l'absence d'analyte capturé, sont alignés parallèlement à un axe latéral, l'axe latéral et l'axe longitudinal n'étant pas parallèles.

Selon un mode de réalisation, le support résonant est disposé entre la source de lumière et le capteur d'image, de telle sorte que lors de l'étape b), chaque région d'intérêt formée sur l'image de mesure est représentative d'une intensité transmise par le cristal photonique à laquelle elle est optiquement couplée.

Selon un mode de réalisation:

- aucune optique de formation d'image n'est disposée entre le capteur d'image et le support résonant;
- ou un système optique, de type lentille ou objectif, est disposé entre le capteur d'image et le support résonant, le système optique conjuguant le capteur d'image au support résonant.

Selon un mode de réalisation, le support résonant délimite un demi-espace, comportant la source de lumière ; le capteur d'image est disposé dans le même demi-espace que la source de lumière, de telle sorte que chaque région d'intérêt formée sur l'image de mesure est représentative d'une intensité réfléchie par le cristal photonique à laquelle elle est optiquement couplée.

Un deuxième objet de l'invention est un dispositif d'analyse d'un échantillon tel qu'il est défini dans la revendication 1, comportant une source de lumière, un capteur d'image et un support résonant, disposé entre la source de lumière et le capteur d'image, de telle sorte que le capteur d'image est configuré pour acquérir une image du support résonant, le support résonant étant destiné à être disposé au contact d'un échantillon, le support résonant comportant une surface présentant des cristaux photoniques, séparés les uns des autres, le support résonant étant tel que :

- une longueur d'onde de résonance est associée à chaque cristal photonique, de telle sorte que la transmission ou la réflexion de la lumière, par chaque cristal photonique, est maximale à la longueur d'onde de résonance à laquelle il est associé, les longueurs d'onde de résonance des cristaux photoniques définissant une bande spectrale de résonance, s'étendant entre 200 nm et 1500 nm ;

- la source de lumière est configurée pour illuminer simultanément différents cristaux photoniques, dans une bande spectrale d'illumination recouvrant au moins en partie la bande spectrale de résonance ;
- au moins deux cristaux photoniques sont configurés pour être en contact un même analyte, présent dans l'échantillon, lesdits cristaux photoniques étant associés à deux longueurs d'onde de résonance différentes, la longueur d'onde de résonance associée à chaque cristal photonique dépendant d'une quantité d'analyte au contact du cristal photonique.
- chaque cristal photonique comporte des trous ménagés à travers une couche mince, les trous étant destinés à être remplis par l'échantillon ;
- la longueur d'onde de résonance de chaque cristal photonique dépend du rayon et de l'espacement entre les trous, ainsi que de l'indice de réfraction de la couche mince et de l'indice de réfraction de l'échantillon.
- des premiers trous ayant une première dimension, la première dimension étant un rayon ou une diagonale, les premiers trous définissant un premier motif ;
- des deuxièmes trous, ayant une deuxième dimension, la deuxième dimension étant strictement inférieure à la première dimension, les deuxièmes trous définissant un deuxième motif périodique ;
- le deuxième motif et le premier motif sont décalés l'un par rapport à l'autre, parallèlement à la surface du support résonant, selon un décalage spatial;

de telle sorte que la longueur d'onde de résonance associée à chaque cristal photonique dépend de la première dimension, de la deuxième dimension, et du décalage spatial.

Selon un mode de réalisation, les cristaux photoniques, configurés pour être en contact avec un même analyte, sont alignés parallèlement à un même axe longitudinal, les longueurs d'onde de résonance respectivement associées à deux cristaux photoniques adjacents étant décalées selon un pas de discrétisation compris entre 1 nm et 10 nm ou entre 1 nm et 50 nm.

Selon un mode de réalisation, les cristaux photoniques, adressant un analyte, sont configurés pour capturer sélectivement un même analyte. Ils peuvent notamment être recouverts d'une couche de fonctionnalisation d'intérêt, propice à une capture sélective de l'analyte.

Selon un mode de réalisation, le support résonant comporte

- des cristaux photoniques de rang 1, configurés pour capturer sélectivement un premier analyte ;
- des cristaux photoniques de rang j, configurés pour capturer sélectivement un jième analyte, différent des analytes de rang inférieurs à j.

Selon un mode de réalisation,

- les cristaux photoniques de même rang sont alignés parallèlement à un axe longitudinal;
- et les cristaux photoniques associés selon une même longueur d'onde de résonance, en l'absence d'analyte, sont alignés parallèlement à un axe latéral, l'axe latéral et l'axe longitudinal n'étant pas alignés.

Selon un mode de réalisation, les cristaux photoniques s'étendent selon un plan de support, et la source de lumière est configurée pour émettre une onde lumineuse d'illumination, dans la bande spectrale d'illumination, se propageant jusqu'au support résonant selon un axe de propagation perpendiculaire ou sensiblement perpendiculaire au plan de support.

Le plan de support peut s'étendre parallèlement à un plan de détection défini par le capteur d'image.

Le dispositif peut comporter l'une des caractéristiques décrites en lien avec le premier objet de l'invention.

L'invention sera mieux comprise à la lecture de l'exposé des exemples de réalisation présentés, dans la suite de la description, en lien avec les figures listées ci-dessous.

## FIGURES

La figure 1A est un premier exemple de dispositif selon l'invention.

La figure 1B représente un deuxième exemple de dispositif selon l'invention.

La figure 1C est un troisième exemple de dispositif selon l'invention.

La figure 1D est un détail du support résonant représenté sur les figures 1A, 1B et 1C.

Les figures 2A à 2H schématisent le fonctionnement de l'invention selon un premier mode de réalisation.

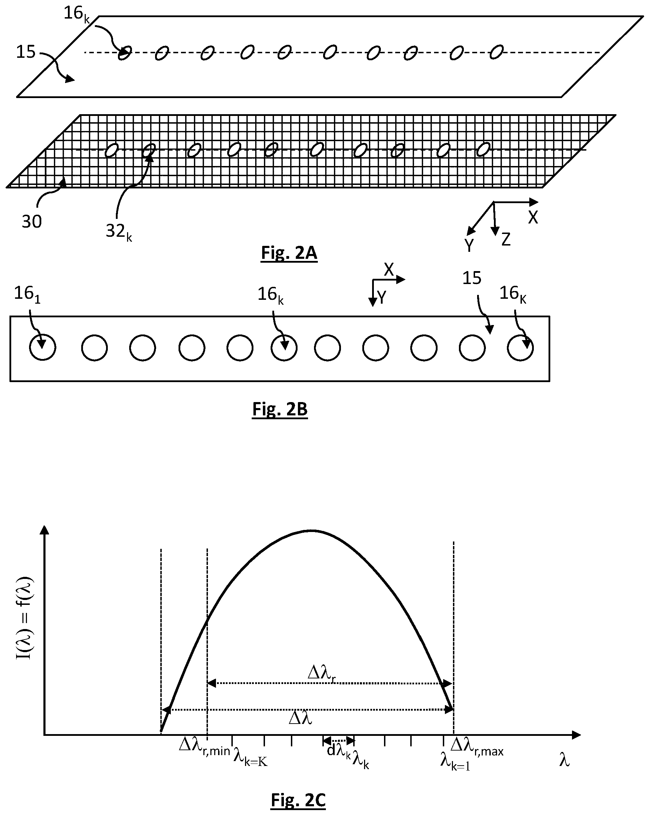

La figure 2A montre un exemple d'agencement du capteur d'image par rapport au support résonant.

La figure 2B schématise des cristaux photoniques adressant un même analyte et répartis selon une même ligne.

La figure 2C montre un exemple de fonction d'intensité spectrale que suit la source de lumière, dans une bande spectrale de résonance définie par les longueurs d'onde de résonance des cristaux photoniques formés sur le support résonant.

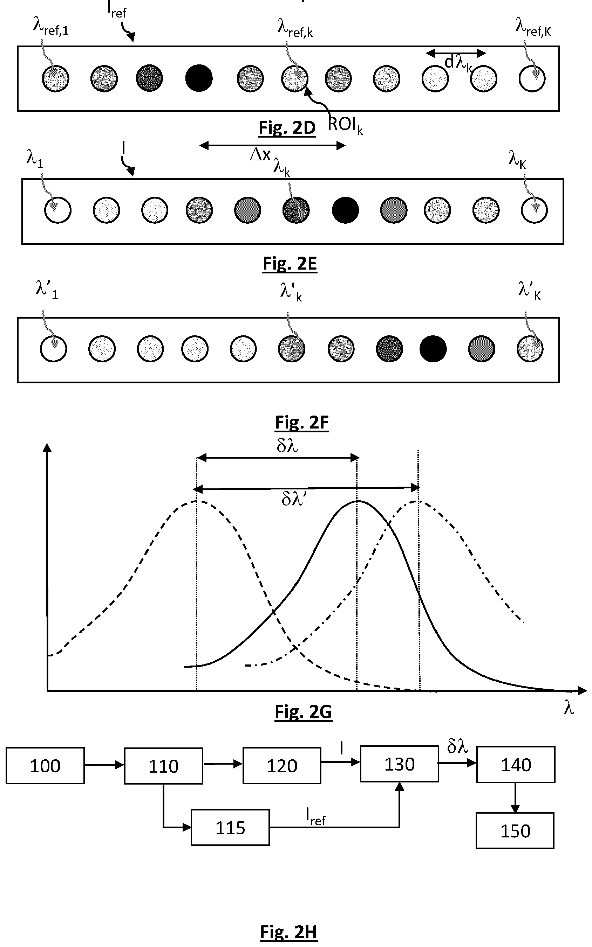

Les figures 2D, 2E et 2F illustrent une intensité transmise par chaque cristal photonique respectivement :

- en l'absence d'analyte ;
- en présence d'une faible quantité d'analyte capturé par le support résonant ;
- en présence d'une quantité élevée d'analyte capturé par le support résonant.

La figure 2G montre des profils, selon l'axe longitudinal, de l'intensité transmise par les cristaux photoniques représentés sur les figures 2D (pointillés), 2E (trait plein) à 2F (traits mixtes).

La figure 2H schématise les principales étapes d'un procédé selon l'invention.

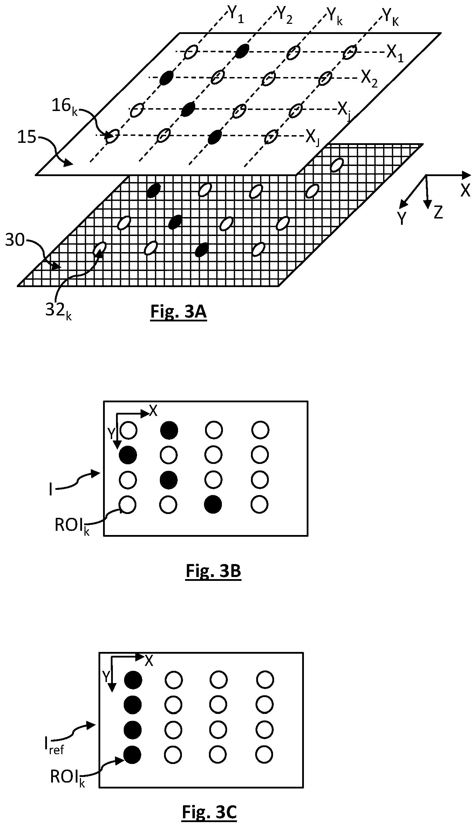

La figure 3A montre une superposition d'un support résonant et d'un capteur d'image d'un dispositif selon l'invention, l'invention fonctionnant selon un mode de réalisation dit bidimensionnel.

Les figures 3B et 3C illustrent une intensité transmise par chaque cristal photonique respectivement en présence d'analytes capturés par le support résonant et en l'absence d'analyte capturé sur le support.

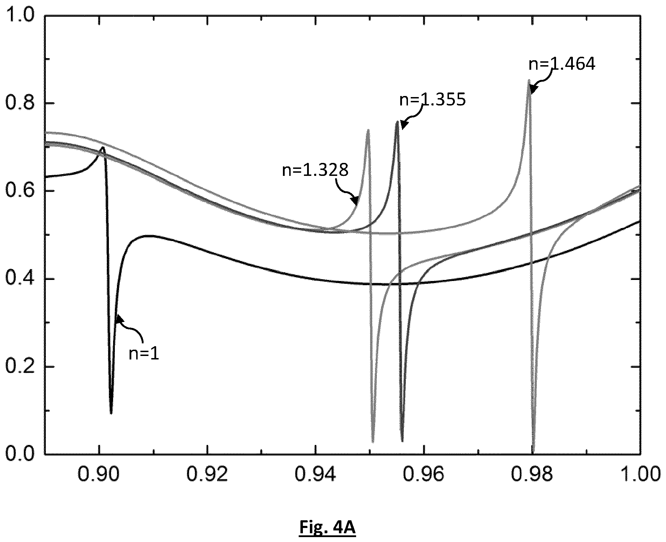

La figure 4A montre une variation de la longueur d'onde de résonance de réflexion d'un cristal photonique en fonction de la longueur d'onde.

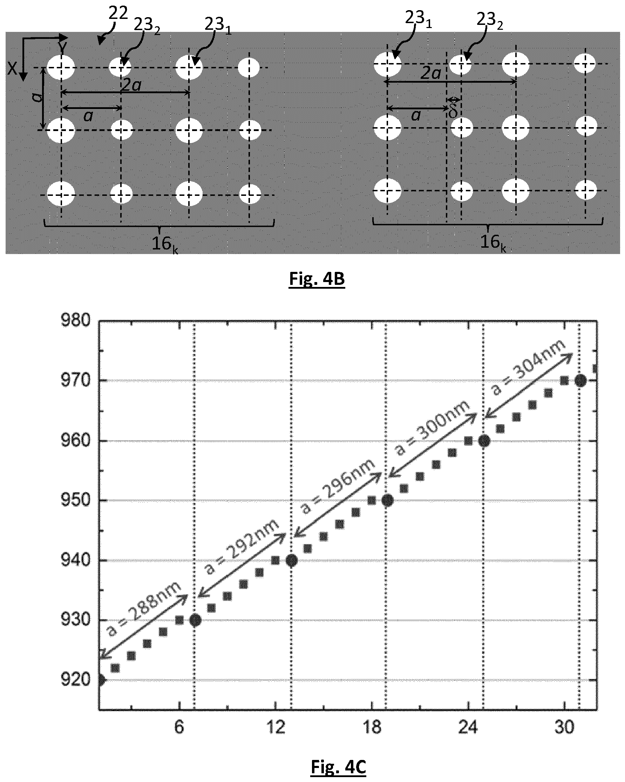

La figure 4B représente un détail d'un support résonant, le support résonant présentant des trous répartis selon une double période.

La figure 4C montre une évolution de la longueur d'onde de résonance en fonction de l'agencement des trous d'un cristal photonique tel que représenté sur la figure 4B.

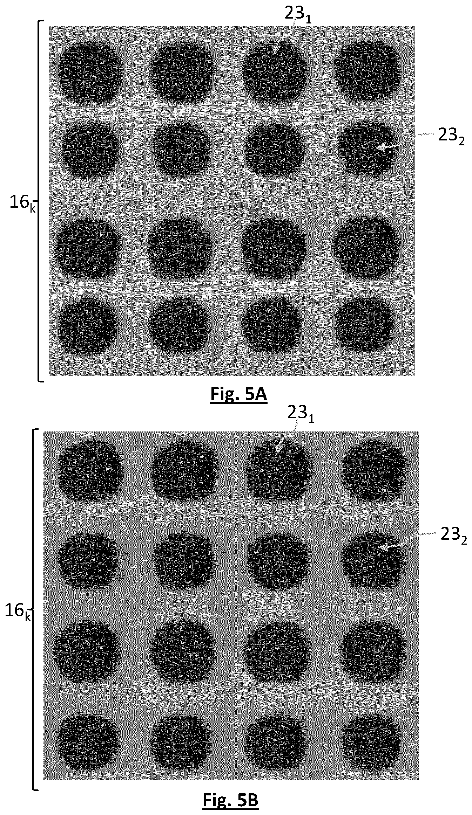

Les figures 5A et 5B sont des exemples de deux agencements différents de trous formant des cristaux photoniques.

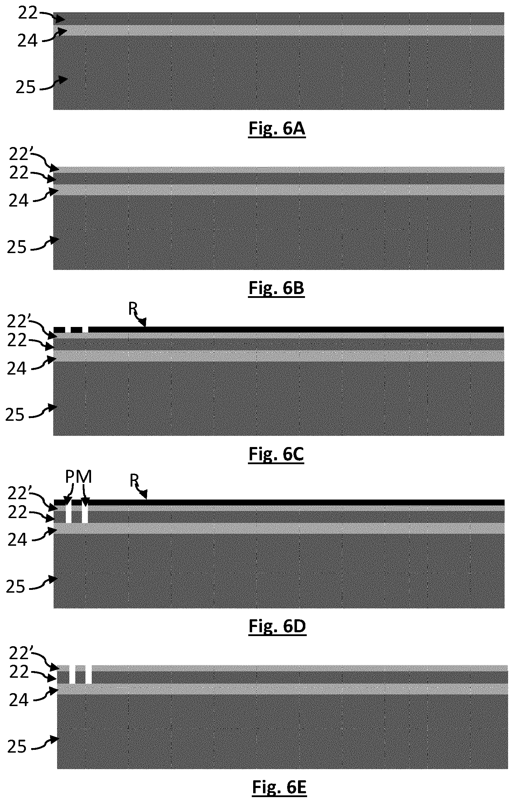

Les figures 6A à 6M illustrent les étapes de fabrication d'un support résonant.

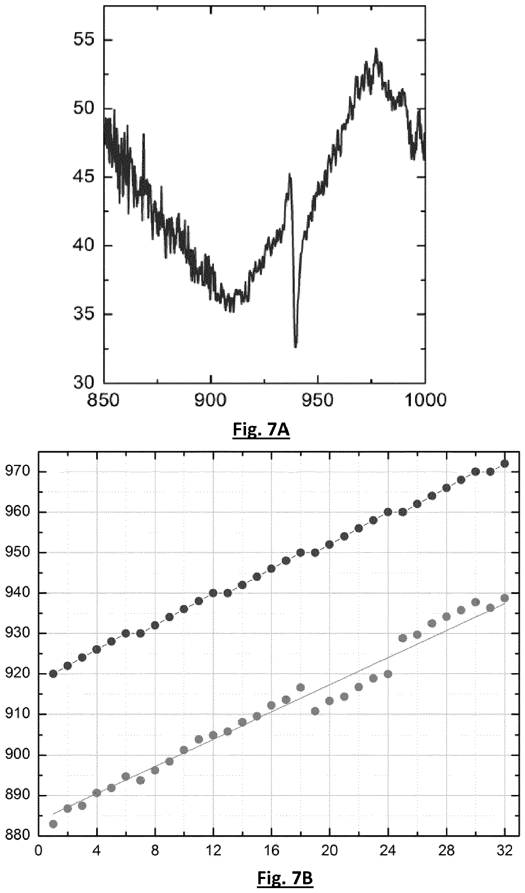

La figure 7A montre une évolution de la transmission spectrale d'un cristal photonique illuminé par un faisceau lumineux polychromatique, en incidence normale, en fonction de la longueur d'onde d'illumination. La figure 7A a été obtenue expérimentalement.

La figure 7B est une comparaison de longueurs d'onde de résonance de réflexion, mesurées expérimentalement et modélisées, pour différents cristaux photoniques.

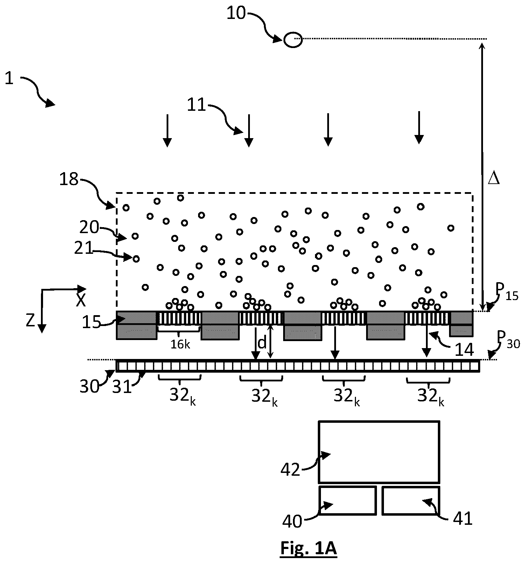

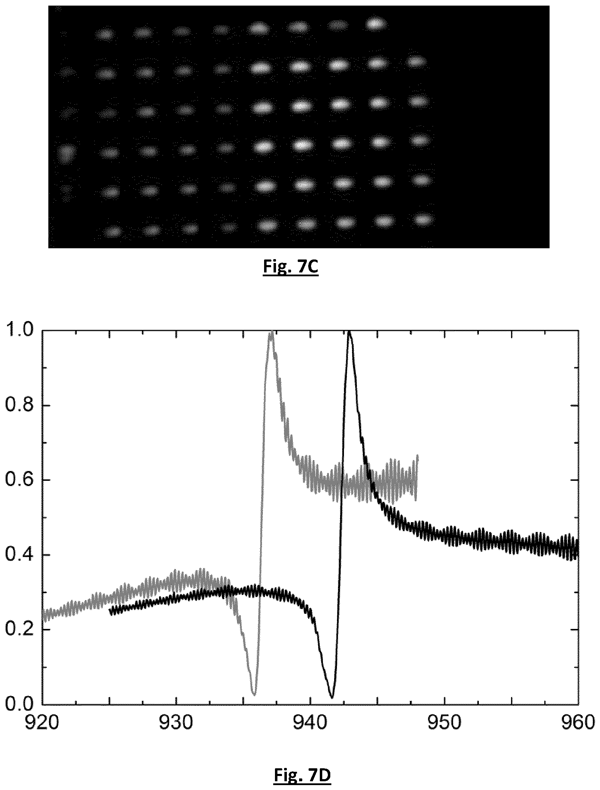

La figure 7C montre une image expérimentale obtenue à l'aide d'un montage tel que représenté sur la figure 1A, l'échantillon étant de l'eau.

La figure 7D illustre une variation de la longueur d'onde de résonance de réflexion lorsque l'échantillon est formé par deux liquides différents.

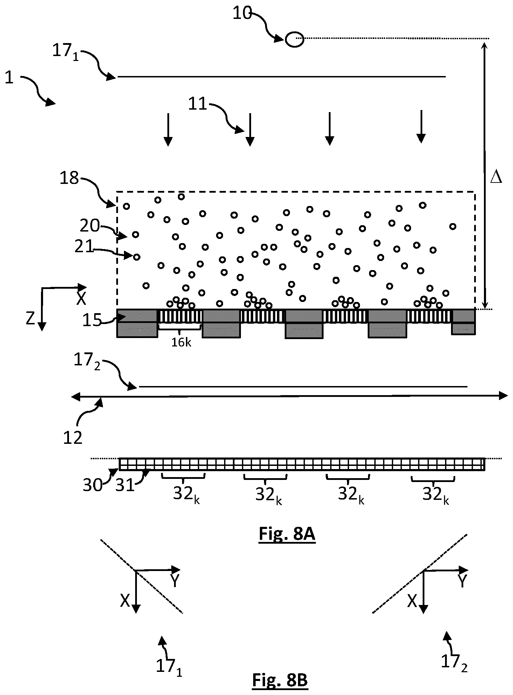

La figure 8A montre un mode de réalisation préféré de l'invention.

La figure 8B schématise les directions de polarisation de polariseurs décrits en lien avec la figure 8A.

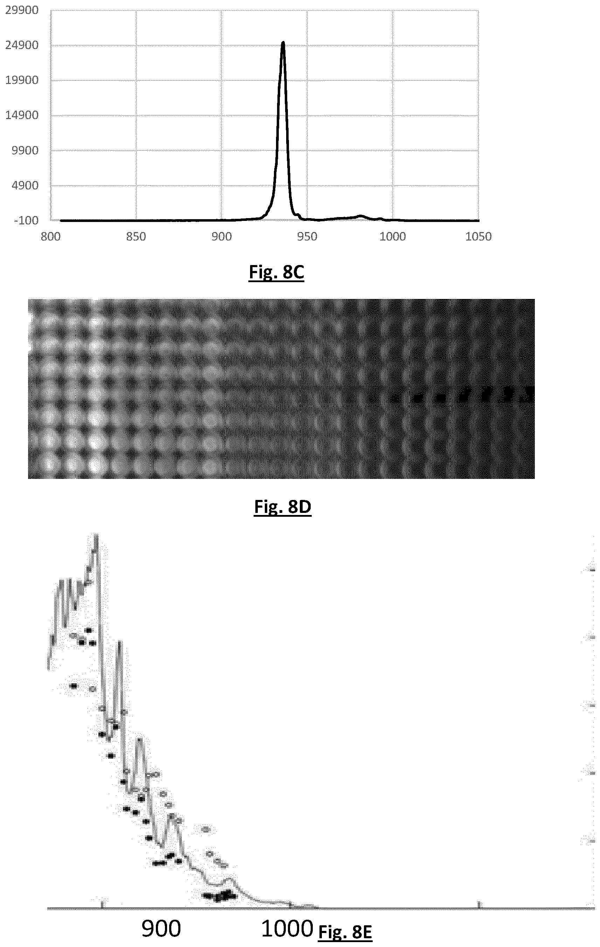

La figure 8C représente un spectre en transmission d'un cristal photonique, le cristal photonique étant positionné entre deux polariseurs selon la configuration de la figure 8B, le spectre ayant été mesuré par un spectromètre.

La figure 8D est une image d'un support résonant exposé à une onde lumineuse émise par une source de lumière et placé dans la configuration correspondant aux figures 8A et 8B.

La figure 8E montre un profil spectral d'intensité de la source de lumière. Elle montre également des intensités mesurées à l'aide d'un spectromètre, focalisé sur chaque cristal photonique du support. Elle représente également des niveaux d'intensité mesurés le long d'une ligne de la figure 8D.

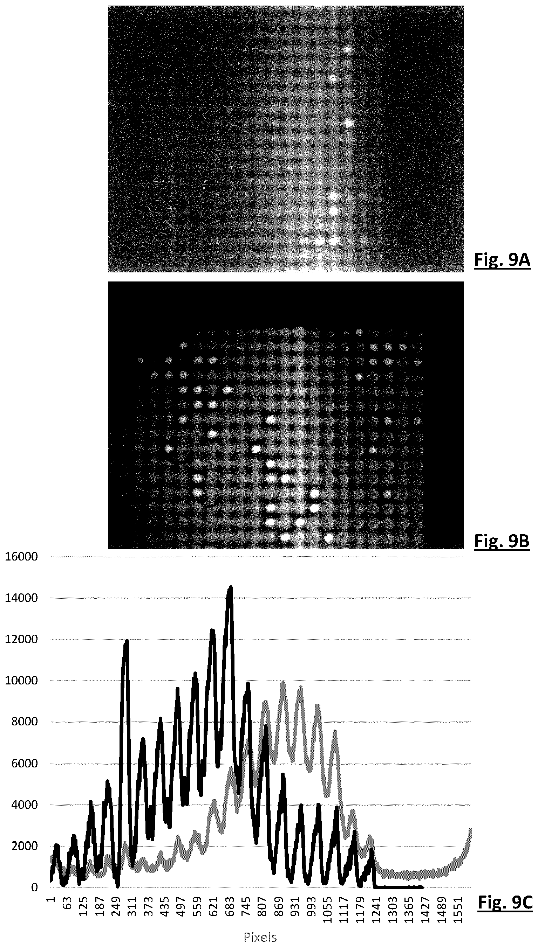

Les figures 9A et 9B sont respectivement des images d'un support résonant illuminé selon une fonction spectrale d'illumination, et mis au contact d'eau et d'éthanol.

La figure 9C est une comparaison de profils horizontaux respectivement formés sur les figures 9A et 9B.

## EXPOSE DE MODES DE REALISATION PARTICULIERS

La figure 1A montre un exemple de dispositif 1 d'analyse d'un échantillon selon l'invention. Le dispositif 1 comporte une source de lumière 10, configurée pour émettre une onde lumineuse d'illumination 11 se propageant vers un échantillon 20. L'onde lumineuse d'illumination se propage parallèlement à un axe de propagation Z. L'échantillon 20 est disposé sur un support 15, dit support résonant. L'échantillon 20 peut comporter un milieu fluide, par exemple gazeux ou liquide, comportant au moins un analyte 21. L'échantillon est disposé au contact du support résonant 15, au moins temporairement.

Par analyte, on entend une espèce chimique ou biologique dont on souhaite déterminer la présence, et éventuellement une quantité, dans l'échantillon. L'analyte 21 peut par exemple être une molécule chimique, une protéine, un peptide, un anticorps, un antigène, un fragment de séquence de nucléotides, ou une particule. Par particule, on entend par exemple une cellule biologique, une gouttelette insoluble dans un milieu, une nanobille. Il peut également s'agir d'un microorganisme, par exemple une bactérie, une levure ou une microalgue. De préférence, une particule a un diamètre, ou est inscrite dans un diamètre, inférieur à 20 $\mu$m, voire à 10 $\mu$m ou à 5 $\mu$m.

Par support résonant, on entend un support dont une partie est apte à entrer en résonance, de façon à transmettre ou à réfléchir une intensité maximale de lumière dans une longueur d'onde de résonance. La structure du support résonant est décrite par la suite.

L'échantillon 20 peut se présenter sous la forme d'une goutte déposée sur le support résonant 15. Il peut également s'agir d'un fluide, confiné dans une chambre fluidique 18, associée au support résonant 15. Le support résonant peut par exemple constituer une paroi de la chambre fluidique 18 dans laquelle s'étend l'échantillon.

Le dispositif 1 comporte également un capteur d'image 30. Le capteur d'image est de préférence un capteur pixelisé, comportant des pixels 31 disposés selon un arrangement matriciel. Les pixels du capteur d'image 30 définissent un plan de détection $P_{30}$.

De préférence, le plan de détection $P_{30}$ est disposé perpendiculairement à l'axe de propagation Z, ou sensiblement perpendiculairement à ce dernier. Par sensiblement perpendiculairement, il est entendu perpendiculairement, en admettant une tolérance angulaire de ± 20° ou de préférence ± 10°, voire ± 5°. Ainsi, l'onde d'illumination 11 émise par la source de lumière 10 atteint le support selon une incidence normale, à la tolérance angulaire près.

De préférence, le support résonant 15 définit un plan de capture $P_{15}$. Le plan de capture $P_{15}$ s'étend perpendiculairement à l'axe de propagation Z, ou sensiblement perpendiculairement à ce dernier. Le support résonant s'étend selon un axe longitudinal X et un axe latéral Y. Les axes X et Y sont coplanaires du plan de capture. Ils sont sécants, et de préférence perpendiculaires.

La source de lumière 10 peut être monochromatique ou polychromatique. L'onde d'illumination 11 s'étend selon une bande spectrale d'illumination $\Delta\lambda$, dont la largeur est de préférence inférieure à 200 nm, voire inférieure à 100 nm voire à 10 nm. La bande spectrale d'illumination se situe de préférence dans le domaine visible, ou dans le proche UV ou dans le proche infrarouge. Ainsi, la bande spectrale d'illumination s'étend en dessous de 1500 nm. De préférence, la source de lumière 10 est disposée à une distance $\Delta$ du support résonant 15, de telle sorte que l'onde lumineuse 11 atteint ce dernier sous la forme d'une onde plane. Un élément optique de collimation, connu de l'homme du métier, peut être disposé entre la source de lumière 10 et l'échantillon 20, de façon à former une onde lumineuse 11 plane.

De préférence, le plan de détection $P_{30}$ s'étend parallèlement au plan de capture $P_{15}$.

Un aspect important de l'invention est que le support résonant 15 comporte des zones élémentaires nanostructurées, séparées les unes des autres, chaque zone élémentaire formant un cristal photonique 16. Ainsi, le support résonant comporte des cristaux photoniques $16_k$, différents les uns des autres, et espacés les uns des autres. L'indice k est un entier strictement compris entre 1 et K, K correspondant au nombre de cristaux photoniques ménagés sur le support résonant 15.

Chaque cristal photonique $16_k$ présente une longueur d'onde de résonance $\lambda_k$ qui lui est propre. A la longueur d'onde de résonance $\lambda_k$ qui lui est associée, chaque cristal photonique $16_k$ présente un pic de transmission ou de réflexion de la lumière. Chaque cristal présente ainsi une longueur d'onde de résonance en réflexion et une longueur d'onde de résonance en transmission.

Le capteur d'image 30 est configuré de telle sorte que les pixels 31 sont répartis en groupes de pixels $32_k$, les pixels 31 appartenant à un même groupe de pixels $32_k$ étant optiquement couplés à un même cristal photonique $16_k$. Le capteur d'image 30 est par exemple un capteur matriciel CMOS.

Par groupe de pixels, on entend un pixel ou un ensemble de pixels adjacents les uns des autres et optiquement couplés à un même cristal photonique.

Par optiquement couplé, il est entendu que les pixels 31 d'un même groupe de pixel $32_k$ collectent une lumière dont l'intensité est au moins 80% ou 90% due à la lumière se propageant à travers le cristal photonique $16_k$.

Dans l'exemple représenté sur la figure 1A, la distance d entre chaque cristal photonique $16_k$ et le groupe de pixel $32_k$ qui lui est respectivement associé, est de 500 $\mu$m. Cette distance est de préférence comprise entre quelques dizaines de $\mu$m et 1 mm. Une distance faible améliore le couplage optique entre chaque cristal photonique $16_k$ et le groupe de pixel $32_k$ qui lui est associé. La configuration représentée sur la figure 1A est une configuration d'imagerie sans lentille, aucune optique de formation d'image n'étant interposée entre le support résonant 15 et le capteur d'image 30. Il s'agit d'une configuration peu coûteuse et compacte.

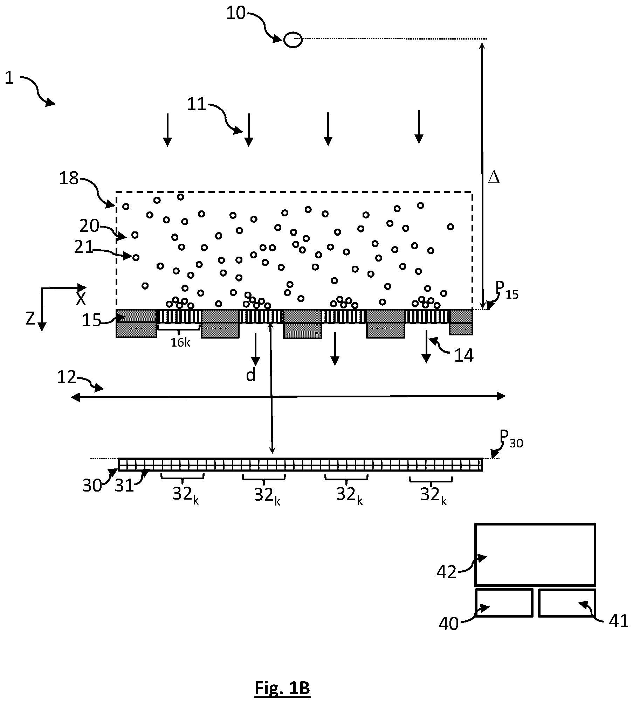

De façon alternative, comme représenté sur la figure 1B, un système optique 12, par exemple une lentille ou un objectif, est disposé entre le support résonant 15 et le capteur d'image 30. Le système optique 12 permet un couplage optique de chaque cristal photonique $16_k$ avec un groupe de pixels $32_k$. Un tel système optique 12 permet de conjuguer chaque réseau diffraction $16_k$ avec un groupe de pixel $32_k$.

La source de lumière est disposée à une distance $\Delta$ du support résonant, de telle sorte que plusieurs cristaux photoniques sont simultanément illuminés par la source de lumière. Ainsi, au moins 3, et de préférence au moins 5 ou 10 cristaux photoniques sont simultanément illuminés par la source de lumière. L'illumination du support résonant est de préférence étendue, au sens où la surface éclairée est de préférence supérieure à 1 $mm^2$, voire 1 $cm^2$. La surface illuminée peut correspondre au champ d'observation du capteur d'image 30. Selon la configuration sans lentille, décrite en lien avec la figure 1A, la surface illuminée correspond à la surface du capteur d'image, soit de l'ordre de 35 $mm^2$.

Le dispositif 1 comporte également une unité de traitement 40, par exemple un microprocesseur, configurée pour traiter et/ou afficher des images acquises par le capteur d'image 30. L'unité de traitement peut être reliée à une mémoire 41, comportant des instructions pour la mise en oeuvre d'algorithmes de traitement d'image. L'unité de traitement 40 est de préférence reliée à un écran 42.

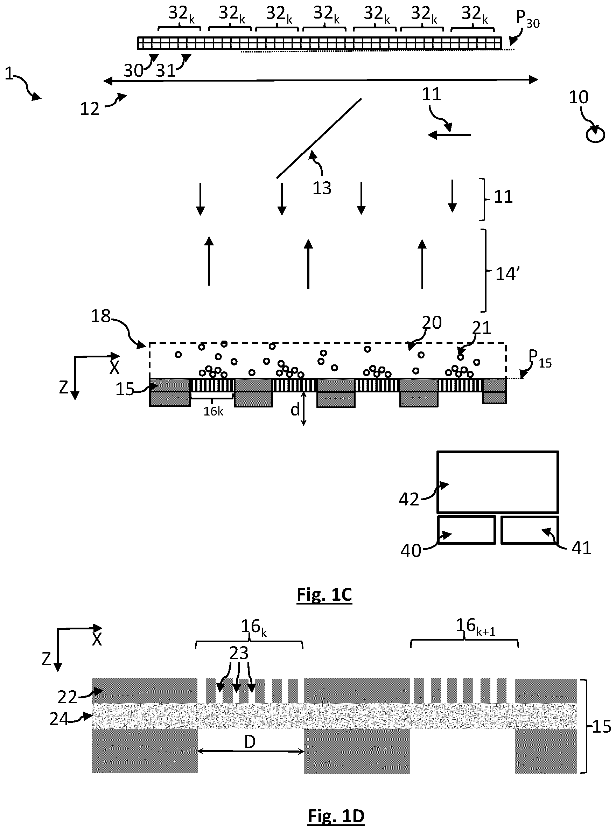

Les configurations schématisées sur les figures 1A et 1B sont des configurations en transmission, selon lesquels le support résonant 15 est interposé entre la source de lumière 10 et le capteur d'image 30. Ainsi, le capteur d'image 30 détecte une onde lumineuse 14 transmise par le support résonant 15. Par transmise, on entend se propageant dans le même sens que l'onde lumineuse incidente 11. Selon une autre configuration, illustrée sur la figure 1C, le plan de capture $P_{15}$ sépare l'espace en deux demi-espaces. Le capteur d'image 30 se trouve dans le même demi-espace que la source de lumière 10. Dans l'exemple représenté sur la figure 1C, une lame semi-réfléchissante 13 réfléchit l'onde lumineuse 11, émise par la source de lumière 10, vers l'échantillon 20, et transmet une onde lumineuse 14', réfléchie par le support résonant 15, vers le capteur d'image 30. Une telle configuration est usuellement désignée par le terme "en réflexion". Un système optique 12 permet un couplage optique de chaque cristal photonique $16_k$ avec un groupe de pixels $32_k$ du capteur d'image 30, comme précédemment décrit.

La figure 1D montre une coupe transversale, selon un plan perpendiculaire au plan de capture $P_{15}$, d'un détail du support résonant 15. Chaque cristal photonique $16_k$, $16_{k+1}$ est formé par des trous 23 formés dans une couche mince 22, et débouchant à la surface de cette dernière. La couche mince 22 peut être réalisée dans un matériau diélectrique ou semi-conducteur. Les trous 23 sont agencés selon un motif périodique, de préférence bidimensionnel. Lors de l'utilisation du support résonant, les trous 23 sont destinés à être remplis par l'échantillon 20. Il est préférable que la couche mince 22 présente un indice de réfraction éloigné de l'indice de réfraction de l'échantillon, de façon à obtenir un contraste d'indice élevé entre l'échantillon 20, remplissant les trous 23, et la couche mince 22. De préférence, l'écart d'indice de réfraction entre l'échantillon et le matériau formant la couche mince 22 est supérieur à 0.1, voire à 0.5. Ainsi, l'indice de réfraction de la couche mince 22 est de préférence supérieur à 2, et encore de préférence supérieur à 3. Par exemple, la couche mince peut être en silicium (n = 3.48), ou en nitrure de silicium $Si_3N_4$ (n = 2) ou en oxyde de titane ($TiO_2$).

Ainsi, la couche mince 22 comporte plusieurs cristaux photoniques résonants $16_k$, séparés les uns des autres, présentant chacun une longueur d'onde de résonance $\lambda_k$ en transmission ou en réflexion. L'épaisseur de la couche mince 22 est de préférence comprise entre 20 et 500 nm, ou entre 20 nm et 1 $\mu$m. Les trous 23 s'étendent à travers la couche mince 22, autour d'un axe perpendiculaire au plan du support. Les trous 23 peuvent en particulier s'étendre autour d'un axe parallèle à l'axe de propagation Z.

Dans le plan du support $P_{15}$, les cristaux photoniques $16_k$ présentent une diagonale ou un diamètre compris entre 10 $\mu$m et 500 $\mu$m, par exemple 100 $\mu$m. Chaque cristal photonique est porté par une membrane transparente ou translucide, formée par une couche 24. La fabrication des cristaux photoniques est décrite par la suite, en lien avec les figures 6A à 6M.

Les propriétés spectrales de transmission et de réflexion de la lumière des cristaux photoniques peuvent être déterminées à l'aide de simulations effectuées par des codes de calcul. En effet, les propriétés de propagation de la lumière dans les cristaux photoniques découlent de leur arrangement périodique spécifique. Ces propriétés de propagation sont aisément modélisées, par l'homme du métier, sur la base des équations spatio-temporelles de Maxwell. Dans la suite de cette description, les modélisations sont réalisées à l'aide du logiciel Rsoft, mettant en oeuvre une méthode de type RCWA.

Par cristal photonique, on entend une structure, dont l'indice de réfraction varie périodiquement à l'échelle de la longueur d'onde, dans une ou plusieurs directions. Dans les exemples décrits dans cette description, les cristaux photoniques sont bidimensionnels, ce qui constitue une configuration préférée. L'invention tire alors profit du développement de techniques de micro structuration des matériaux diélectriques, semi-conducteurs, ou métalliques, permettant un contrôle de l'interaction des ondes électromagnétiques dans des structures tridimensionnelles basées sur l'agencement de matériaux de différents indices.

Chaque cristal photonique $16_k$ transmet (ou réfléchit) la lumière selon une fonction spectrale de transmission (ou de réflexion), décrivant une évolution d'une intensité de lumière transmise (ou réfléchie) par le cristal photonique, en fonction de la longueur d'onde. L'exploitation de la résonance de Fano permet de concevoir des cristaux photoniques résonants compacts, pouvant être illuminés collectivement par une onde lumineuse d'illumination, selon une incidence normale. Cela permet d'illuminer simultanément, de façon simple, des cristaux photoniques répartis selon une ou deux dimensions. La fonction spectrale de transmission de chaque cristal photonique présente un maximum, à une longueur d'onde de résonance en transmission. De façon analogue, la fonction spectrale de réflexion présente un maximum, à une longueur de résonance en réflexion.

La fonction spectrale de transmission ou de réflexion, et en particulier les longueurs d'onde de résonance en transmission ou en réflexion, dépendent tout d'abord de la structure de chaque cristal photonique, c'est-à-dire de la taille et de l'arrangement spatial des trous 23 réalisés dans la couche mince 22, pour former le cristal photonique $16_k$. En réflexion ou en transmission, la longueur d'onde de résonance $\lambda_k$ dépend également du contraste d'indice de réfraction entre la couche mince 22 et l'échantillon, au niveau des trous 23. La longueur d'onde de résonance dépend également de l'épaisseur de la couche mince 22. Elle dépend également de l'indice de réfraction et de l'épaisseur de la couche transparente 24.

Les figures 2A à 2H illustrent le principe de l'invention. On se place dans cet exemple, selon une configuration en transmission, telle que décrite sur la figure 1A. Sur la figure 2A, on a représenté le support résonant 15, ainsi que des cristaux photoniques $16_k$ répartis sur le support résonant. Le capteur d'image 30 s'étend parallèlement au support résonant. On a également représenté des groupes de pixels $32_k$, chaque groupe de pixels étant optiquement couplé à un cristal photonique $16_k$. Chaque groupe de pixels $32_k$ comporte au moins un pixel.

Le couplage optique d'un groupe de pixels avec un cristal photonique peut être établi, en imagerie sans lentille (cf. figure 1A), en minimisant la distance d entre le capteur d'image 30 et le support résonant 15. Lorsqu'on utilise un système optique 12, le couplage est effectué par le système optique (cf. figure 1B ou figure 1C), ce dernier conjuguant chaque groupe de pixels $32_k$ à un cristal photonique.

Préalablement à la mise en contact avec l'échantillon, le support résonant 15 a fait l'objet d'une fonctionnalisation de surface, au niveau du plan du support $P_{15}$, de telle sorte que chaque cristal photonique est apte à capturer un analyte prédéterminé. La fonctionnalisation de surface est une notion connue de l'homme du métier. Elle consiste à ajouter une fonction spécifique sur la surface à fonctionnaliser, par nanostructuration, ou par le dépôt d'un revêtement, ou par l'adsorption ou le greffage de molécules aux propriétés spécifiques. Dans le cas présent, la fonctionnalisation de surface confère, sur chaque cristal photonique, une propriété de capture sélective d'un analyte. La capture de l'analyte peut être obtenue par établissement d'une liaison covalente, hydrogène ou électrostatique avec l'analyte et/ou d'un greffage de l'analyte avec un ligand disposé sur la surface de capture fonctionnalisée. Suite à la fonctionnalisation, le plan de support $P_{15}$ est également un plan de capture, fonctionnalisé pour capturer un ou plusieurs analytes.

Lorsque le support résonant est mis au contact de l'échantillon, l'échantillon remplit les trous 23 de chaque cristal photonique $16_k$. Les propriétés spectrales de transmission (ou de réflexion) de la lumière de chaque cristal photonique $16_k$ sont alors gouvernées par la structure de chaque cristal photonique, en particulier la taille et la répartition des trous 23, ainsi que les indices de réfraction respectifs de l'échantillon 20 et de la couche mince 22.

Sur la figure 2B, on a représenté les cristaux photoniques $16_k$ adressant un même analyte. Ils sont alignés selon des lignes, parallèlement à l'axe longitudinal X.

Du fait de la fonctionnalisation de surface, lorsque l'analyte recherché est présent dans l'échantillon, la concentration d'analyte, capturée par le support, augmente après que ce dernier a été mis en contact avec l'échantillon. Il en résulte une variation d'indice locale de l'échantillon, à l'interface entre l'échantillon et le support fonctionnalisé. Sous l'effet d'une telle variation d'indice, les propriétés spectrales de transmission (ou de réflexion) de chaque cristal photonique fonctionnalisé évoluent, et en particulier la longueur d'onde de résonance des cristaux photonique.

Un aspect remarquable de l'invention est que les cristaux photoniques sont dimensionnés de telle sorte que :

- les longueurs d'onde de résonance respectives de chaque cristal photonique sont différentes les unes des autres ;
- le décalage spectral entre deux longueurs d'onde de résonance de deux cristaux photoniques adjacents est fin et maîtrisé.

L'ensemble des longueurs d'onde de résonance des cristaux photoniques adressant un même analyte s'étendent entre une longueur d'onde de résonance minimale $\lambda_{r,min}$ et une longueur d'onde de résonance maximale $\lambda_{r,max}$. Ces dernières délimitent une bande spectrale de résonance $\Delta\lambda_r$. Il est nécessaire que la bande spectrale d'illumination $\Delta\lambda$ de la source de lumière soit, au moins en partie, incluse dans la bande spectrale de résonance $\Delta\lambda_r$. La bande spectrale d'illumination $\Delta\lambda$ peut être confondue avec la bande spectrale de résonance $\Delta\lambda_r$. Elle peut être plus large ou plus étroite que la bande spectrale de résonance $\Delta\lambda_r$. Sur la figure 2C, on a représenté la bande spectrale d'illumination, la bande spectrale de résonance $\Delta\lambda_r$ ainsi que les longueurs d'onde de résonance $\lambda_{k=1},...\lambda_k,...\lambda_{k=K}$ respectives des cristaux photoniques $16_{k=1},...16_k,... 16_{k=K}$.

Dans la bande spectrale de résonance $\Delta\lambda_r$, définie par les cristaux photoniques du support, l'intensité de l'onde lumineuse 11 émise par la source de lumière 10 n'est pas constante. Dans la bande spectrale de résonance $\Delta\lambda_r$, l'intensité de l'onde lumineuse 11 est variable, et suit une fonction spectrale d'illumination $f$. La fonction spectrale d'illumination $f$ définit l'intensité de l'onde lumineuse incidente 11 dans différentes longueurs d'ondes de la bande spectrale de résonance, de telle sorte que :

$$I(\lambda) = f(\lambda)$$

où :

- $\lambda$ est une longueur d'onde de la bande spectrale de résonance $\Delta\lambda_r$;
- $I(\lambda)$ est l'intensité de l'onde d'illumination 11, ou intensité d'illumination, à la longueur d'onde $\lambda$.

Il est important que la fonction d'illumination $f$ ne soit pas constante, c'est-à-dire que l'intensité de l'onde d'illumination ne soit pas uniforme dans la bande spectrale de résonance $\Delta\lambda_r$. La fonction d'illumination $f$ peut alors être monotone dans la bande spectrale d'illumination, en étant par exemple croissante ou décroissante. Elle peut également être croissante (respectivement décroissante) jusqu'à un extremum puis être décroissante (respectivement croissante) à partir de l'extremum. Lorsque la source de lumière est monochromatique, la fonction d'illumination forme un pic dans la bande spectrale de résonance $\Delta\lambda_r$.

Dans le mode de réalisation préféré, deux cristaux photoniques adjacents $16_k$, $16_{k+1}$, ont des longueurs d'onde de résonance décalées d'un décalage spectral $d\lambda_k$ connu. Le décalage spectral $d\lambda_k$ conditionne la ré-

solution spectrale du procédé. En valeur absolue, le décalage spectral $d\lambda_k$ est de préférence inférieur à 10 nm, et encore de préférence inférieur à 5 nm, voire à 2 nm. Il correspond à un pas spectral de discrétisation, selon lequel l'onde lumineuse d'illumination 11 est discrétisée, comme décrit en lien avec la figure 2G. Des structures de cristaux photoniques permettant d'obtenir un tel décalage spectral sont décrites par la suite.

Lors de la capture de l'analyte, la longueur d'onde de résonance de chaque cristal photonique varie, en passant une valeur $\lambda_{ref,k}$, en l'absence d'analyte, à une valeur $\lambda_k$, en présence d'analyte, avec $\lambda_k = \lambda_{ref,k} + \delta\lambda$ (1). On note que la variation de longueur d'onde de résonance $\delta\lambda$ est la même pour les cristaux photoniques adressant un même analyte. Autrement dit, la sensibilité de la longueur d'onde de résonance vis-à-vis des variations d'indice est la même pour les différents cristaux photoniques.

Le changement de la longueur d'onde de résonance $\delta\lambda$ est consécutif à la capture de l'analyte, qui se traduit généralement par une augmentation de l'indice au niveau de l'interface entre le support résonant et l'échantillon. L'augmentation de l'indice entraîne une variation de la longueur d'onde de résonance de chaque cristal photonique.

Ainsi, l'invention est basée sur une mesure d'une variation de la longueur d'onde de résonance $\delta\lambda$ sous l'effet de la capture de l'analyte par les cristaux photoniques, adressant un même analyte.

La variation $\delta\lambda$ de la longueur d'onde de résonance est observée en prenant en compte une configuration de référence, dans laquelle la quantité d'analyte capturée est connue. De préférence, dans la configuration de référence, la quantité d'analyte capturée par chaque cristal photonique est nulle. C'est ce qui sera considéré dans la suite de la description. De façon alternative, on peut prévoir un mode de réalisation dans lequel dans la configuration de référence correspond à une quantité capturée d'analyte connue.

La précision avec laquelle la variation $\delta\lambda$ de la longueur d'onde de résonance est estimée dépend du décalage spectral $d\lambda_k$ entre deux cristaux photoniques adjacents. Plus le décalage spectral $d\lambda_k$ est faible, meilleure est la résolution avec laquelle on estime la variation $\delta\lambda$.

La variation de la longueur d'onde de résonance $\delta\lambda$ est déterminée en comparant une image de référence $I_{ref}$ du support résonant, dans la configuration de référence, avec une image $I$ du support résonant formée après capture de l'analyte. L'image $I$ du support, après capture, est appelée image de mesure.

Sur la figure 2C, on a représenté une fonction spectrale d'illumination f, précédemment évoquée. L'axe des ordonnées représente l'intensité $I(\lambda)$ de l'onde lumineuse d'illumination 11 en fonction de la longueur d'onde $\lambda$. Dans le cas présent, la fonction spectrale d'illumination comporte un maximum, compris entre les bornes $\lambda_{r,min}$, $\lambda_{r,max}$ de la bande spectrale de résonance $\Delta\lambda_r$. De façon

alternative, la fonction spectrale d'illumination f peut comporter un minimum dans la bande spectrale de résonance $\Delta\lambda_r$. Qu'il s'agisse d'un minimum ou d'un maximum, l'extremum est de préférence compris au milieu de la bande spectrale de résonance $\Delta\lambda_r$. De préférence, l'extremum est situé entre le milieu $\Delta\lambda_r/2$ de la bande spectrale de résonance $\Delta\lambda_r$ la longueur d'onde maximale $\lambda_{r,max}$.

La figure 2D montre les intensités détectées par chaque région d'intérêt $ROI_k$ d'une image $I_{ref}$ acquise par le capteur d'image, dans la configuration de référence, en l'absence de capture d'analyte. Chaque région d'intérêt $ROI_k$ de l'image correspond à un groupe de pixels $32_k$ optiquement couplée à un cristal photonique $16_k$. Ainsi, chaque région d'intérêt $ROI_k$ est représentative d'une intensité lumineuse transmise par chaque cristal photonique $16_k$, à la longueur d'onde de résonance $\lambda_{ref,k}$ de ce dernier.

Les régions d'intérêt $ROI_k$ sont distinctes les unes des autres, et alignées parallèlement aux cristaux photoniques $16_k$. Sur les figures 2D et 2F, les intensités sont représentées en niveau de gris, le niveau de gris le plus sombre correspondant à une valeur maximale d'intensité.

La figure 2E montre les intensités de chaque région d'intérêt $ROI_k$ d'une image, acquise par le capteur d'image, dans la configuration de mesure, après capture de l'analyte par les cristaux photoniques. Chaque région d'intérêt $ROI_k$ est représentative d'une intensité lumineuse transmise par chaque cristal photonique $16_k$, à la longueur d'onde de résonance $\lambda_k$ de ce dernier. Sous l'effet de la capture d'un analyte, la longueur d'onde de résonance $\lambda_k$ est différente de la longueur d'onde de résonance $\lambda_{ref,k}$ avec $\lambda_k = \lambda_{ref,k} + \delta\lambda$.

La comparaison entre l'image de mesure $I$, représentée sur la figure 2E, et l'image de référence $I_{ref}$, représentée sur la figure 2D, montre l'effet de variation de la longueur d'onde de résonance de chaque cristal photonique sous l'effet de la capture d'analyte.

A partir de l'image de mesure et de l'image de référence, on peut former un profil d'intensité, représentatif d'une distribution spatiale de l'intensité de chaque région d'intérêt $ROI_k$ le long de l'axe longitudinal X. Sur la figure 2G, on a représenté un profil de référence, en pointillés, formé à partir de l'image de référence, ainsi qu'un profil de mesure, en traits pleins, formé à partir de l'image de mesure. Le recours à de tels profils facilite la comparaison des deux images $I$ et $I_{ref}$ et l'estimation de la variation $\delta\lambda$ de la longueur d'onde de résonance des cristaux photoniques sous l'effet de la capture d'analyte. Dans la représentation de la figure 2G, chaque profil est un profil interpolé à partir des valeurs discrètes des intensités des différentes régions d'intérêt $ROI_k$ de l'image considérée.

Compte tenu de l'alignement des cristaux photoniques selon une même ligne X, et du décalage spectral fin $d\lambda_k$ entre deux cristaux photoniques adjacents, chaque profil prend approximativement la même forme que la fonction spectrale d'illumination. Ainsi, le support résonant 15 permet une conversion d'une information spectrale en une information spatiale. Il agit de la même façon qu'un spectromètre. L'information spatiale correspond à une position, selon l'axe X, de chaque région d'intérêt $ROI_k$. Une variation spectrale $\delta\lambda$, en l'occurrence la variation de la longueur d'onde de résonance affectant chaque cristal photonique, se traduit par une variation spatiale $\Delta x$ du profil, entre l'image de référence et l'image de mesure. Comme le décalage spectral $d\lambda_k$ entre deux cristaux photoniques adjacents est maîtrisé, la variation de la longueur d'onde de résonance $\delta\lambda$ peut être estimée, selon l'expression :

$$\delta\lambda = \sum_k^{k+\Delta k} d\lambda_k \quad (2)$$

où :

- $\Delta k$ correspond à la variation spatiale, obtenue par une comparaison de l'image de mesure et de l'image de référence, et représentant le nombre de régions d'intérêt $32_k$ formant la variation spatiale $\Delta x$ observée ;
- $\sum_k^{k+\Delta k} d\lambda_k$ correspond à la somme des décalages spectraux $d\lambda_k$ entre les cristaux photoniques respectivement associées aux régions d'intérêt formant la variation spatiale $\Delta x$ observée.

De préférence, le décalage spectral $d\lambda_k$ entre deux cristaux photoniques adjacents est considéré comme constant et égal à $d\lambda$. Dans ce cas, l'expression précédente devient :

$$\delta\lambda = \Delta k \times d\lambda \quad (3)$$

On comprend ici l'intérêt de recourir à une fonction spectrale d'illumination $f$ non uniforme. Cela facilite une comparaison des profils d'intensités respectivement dans la configuration de référence et dans la configuration de mesure, de façon à estimer le nombre $\Delta k$ de régions d'intérêt $ROI_k$ selon lesquelles le profil d'intensité est décalé entre la configuration de référence et la configuration de mesure. Dans l'exemple représenté sur les figures 2D et 2E, $\Delta k = 3$. Le décalage spectral $d\lambda$ est connu et est lié à la géométrie des cristaux photoniques respectivement associés à chaque région d'intérêt, comme décrit dans la suite de la description.

Contrairement à certains dispositifs de l'art antérieur, nécessitant le recours à un spectromètre, l'invention reporte la fonction de séparation spectrale sur le support résonant 15. Cela permet l'utilisation d'un simple capteur d'image, nettement moins onéreux et complexe à mettre en oeuvre.

Selon un mode de réalisation, la source de lumière est monochromatique. La bande spectrale d'illumination peut alors être inférieure ou égale au décalage spectral $d\lambda_k$ de longueur d'onde de résonance de deux cristaux photoniques adjacents. Afin de pouvoir estimer la variation $\delta\lambda$ de longueur d'onde de résonance sous l'effet de la capture de l'analyte, la bande spectrale d'illumination correspond alors à une longueur d'onde de résonance d'un seul cristal photonique dans la configuration de référence, c'est-à-dire en l'absence de capture d'analyte, et dans la configuration de mesure.

La source de lumière peut être monochromatique et accordable, de façon à ce que la bande spectrale d'illumination puisse être modifiée.

L'image de référence peut être une image de l'échantillon acquise avant la capture. Dans ce cas, l'image de référence est formée à un instant initial, auquel on considère que la capture de l'analyte par le support est négligeable. Il peut par exemples s'agir d'un instant proche de la mise en contact du support avec l'échantillon. L'image de mesure est alors acquise postérieurement à l'image de référence

De façon alternative, l'image de référence est une image obtenue avec un support de référence, considéré comme représentatif du support mis en contact avec l'échantillon. Le support de référence est alors mis en contact avec un échantillon de référence, considéré comme représentatif de l'échantillon analysé. L'image de référence est mémorisée. Un tel mode de réalisation suppose une bonne reproductibilité dans la fabrication des supports.

Ainsi, l'image de référence, prise en compte pour estimer la variation de longueur d'onde de résonance, peut être :

- acquise par le capteur d'image, préalablement à l'acquisition de l'image de mesure;
- soit obtenue en utilisant un autre support, puis mémorisée ;
- soit acquise par le capteur d'image, simultanément à l'image de mesure, en utilisant le même support de capture, l'image de référence correspondant à l'image de cristaux photoniques configurés pour ne pas capturer l'analyte. Il s'agit par exemple de cristaux photoniques non fonctionnalisés. Dans ce cas, une partie de l'image acquise par le capteur d'image forme l'image de mesure : cela correspond aux régions d'intérêt de l'image acquise représentant les cristaux photoniques ayant capturé l'analyte, ou, plus généralement, étant en contact avec l'analyte. Une autre partie de l'image acquise par le capteur d'image forme l'image de référence : elle correpond aux régions aux régions d'intérêt de l'image acquise représentant les cristaux photoniques n'ayant capturé l'analyte, ou plus généralement n'étant pas en contact avec l'analyte. Par exemple, les cristaux photoniques fonctionnalisés pour capturer l'analyte sont alignés selon une première ligne, tandis que les cristaux photoniques n'étant pas configurés pour capturer l'analyte sont alignés selon une deuxième ligne, les deux lignes étant parallèles l'une à l'autre. L'image de la première ligne forme l'image de mesure, tandis que l'image de la deuxième ligne forme l'image de référence. Ainsi, à partir d'une même image acquise par le capteur d'image, on peut obtenir l'image de mesure et l'image de référence.

Quel que soit le mode de réalisation, l'image de référence est formée en illuminant le support ou le support de référence selon une bande spectrale d'illumination $\Delta\lambda$ et une fonction spectrale d'illumination f égales à celles mises en oeuvre lors de l'acquisition de l'image de mesure.

Autrement dit, lors de l'obtention de l'image de référence et de l'image de mesure, les conditions d'illumination du support utilisé sont les mêmes.

Sur la figure 2F, on a représenté une image de mesure, dans laquelle la quantité d'analyte capturée par les cristaux photoniques est supérieure à celle correspondant à l'image de la figure 2E. Il en résulte une variation d'indice plus importante au niveau de l'interface entre les cristaux photoniques et l'échantillon, ce qui entraîne une variation plus importante de la longueur d'onde de résonance $\delta\lambda'$. Sur cette image, chaque région d'intérêt $ROI_k$ est représentative de l'intensité transmise par le cristal photonique $16_k$ auquel elle est associée, dans une longueur d'onde de résonance $\lambda'_k$ de ce dernier, avec $\lambda'_k = \lambda_{ref,k} + \delta'\lambda$. Sur la figure 2G, le profil correspondant est en traits mixtes.

Le procédé permet de détecter une présence de l'analyte dans l'échantillon, ce qui correspond à l'observation d'une variation $\delta\lambda$ non nulle de la longueur d'onde de résonance. Il permet également d'estimer une quantité d'analyte capturée par le support résonant, avec une précision dépendant du nombre de cristaux photoniques et du décalage spectral $d\lambda_k$ de la longueur de résonance de deux cristaux photoniques adjacents.

A partir de la quantité d'analyte capturée par le support, il est ensuite possible d'estimer une quantité d'analyte dans l'échantillon, cette dernière pouvant être par exemple exprimée sous la forme d'une concentration. Un étalonnage, utilisant des échantillons dont la concentration en analyte est connue, permet d'obtenir une fonction d'étalonnage, reliant la quantité d'analyte capturée par le support à la concentration d'analyte initialement présente dans l'échantillon.

La figure 2H résume les principales étapes du procédé.

Etape 100 : mise au contact de l'échantillon avec le support résonant.

Etape 110 : illumination de l'échantillon dans la bande spectrale d'illumination $\Delta\lambda$, selon la fonction spectrale d'illumination *f*.

Etape 120 : acquisition d'une image de mesure I du support résonant.

Etape 130 : prise en compte d'une image de référence $I_{ref}$, l'image de référence pouvant être une image du support acquise juste après l'étape 110, préalablement à l'acquisition de l'image de mesure, ce qui forme l'étape optionnelle 115.

Etape 140 : comparaison de l'image de mesure I avec l'image de référence $I_{ref}$, de façon à estimer une variation de la longueur d'onde de résonance $\delta\lambda$ des cristaux photoniques. Il s'agit notamment de déterminer le nombre de cristaux photoniques (ou le nombre de régions d'intérêt) correspondant à la variation de la longueur d'onde de résonance $\delta\lambda$. Connaissant le décalage spectral $d\lambda_k$ entre les longueurs d'onde de résonance des cristaux photoniques, on peut ainsi déterminer la variation de la longueur d'onde de résonance $\delta\lambda$.

Etape 150 : à partir de la comparaison, détermination de la présence, dans l'échantillon, de l'analyte adressé par les cristaux photoniques, et éventuellement estimation d'une quantité d'analyte dans l'échantillon.

Sur l'exemple représenté sur les figures 3A à 3C, le support résonant comporte des cristaux photoniques $16_k$ répartis selon J lignes $X_1...X_j...X_J$. Les cristaux photoniques d'une même ligne $X_j$ sont configurés pour adresser un même analyte. Ainsi, les cristaux photoniques de la première ligne $X_1$ adressent un premier analyte, et les cristaux photoniques de la j$^{ième}$ ligne $X_j$ adressent un j$^{ième}$ analyte. L'indice j est un entier naturel tel que $1 \leq j \leq J$

Comme décrit en lien avec le premier mode de réalisation, les cristaux photoniques sont répartis selon des colonnes $Y_1, Y_2, Y_k, Y_K$, de telle sorte que les cristaux photoniques appartenant à deux colonnes adjacentes $Y_k$ présentent, dans la configuration de référence, une même longueur d'onde de résonance $\lambda_{k,ref}$.

Cette configuration, dite bidimensionnelle, correspond à l'ajout d'une dimension par rapport au mode de réalisation décrit en lien avec les figures 2A à 2H. La dimension ajoutée correspond au type d'analyte. Une telle configuration suppose que chaque ligne ait fait l'objet d'une fonctionnalisation différente l'une de l'autre, de telle sorte que chaque analyte puisse être capturé par une ligne, et de préférence par une seule ligne. Ainsi, la première ligne $X_1$ est fonctionnalisée de façon à capturer un premier analyte. La j$^{ième}$ ligne $X_j$ est fonctionnalisée de façon à capturer un j$^{ième}$ analyte, de préférence différents des analytes adressés par les lignes de rang inférieur.

On note que le dispositif permet d'illuminer simultanément une pluralité de cristaux photoniques, ce qui permet d'obtenir une information exploitable, relative à différents analytes, à partir d'une même image acquise à l'aide d'un simple capteur d'image.

Selon ce mode de réalisation, les étapes 100 à 150, décrites en lien avec la figure 2H, sont répétées pour chaque ligne $X_j$ du support. Les figures 3B et 3C schématisent respectivement une image de mesure et une image de référence. Sur ces figures, la source de lumière est monochromatique. Ainsi, seul le cristal photonique dont la longueur d'onde de résonance correspond à la bande spectrale d'illumination forme une tâche de forte intensité dans la région d'intérêt qui lui est associée sur l'image acquise par le capteur d'image.

Sur l'image de référence (figure 3C), les régions d'intérêt correspondant, sur chaque ligne, à la longueur d'onde d'illumination sont alignées. La comparaison de l'image de mesure (figure 3B) et de l'image de référence montre une variation importante de la longueur d'onde de résonance des cristaux photoniques de la quatrième ligne, moindre sur la première ligne et la 3ème ligne, et nulle sur la 2ème ligne. Cela permet de conclure à la présence du premier analyte, du 3ème analyte et du 4ème analyte dans l'échantillon, ainsi qu'à l'absence du deuxième analyte. Moyennant des étalonnages effectués pour chaque analyte, chaque variation en longueur d'onde de résonance permet une estimation d'une concentration des analytes considérés comme présents dans l'échantillon.

Selon un tel mode de réalisation, le dispositif permet d'effectuer simultanément une détection de la présence de différents analytes dans l'échantillon, et d'en estimer la concentration.

La figure 4A montre des exemples de fonctions spectrales de réflectivité modélisées d'un même cristal photonique, successivement mis en contact de trois échantillons différents, dont les indices de réfraction sont :

- 1, ce qui correspond à l'indice de réfraction de l'air;
- 1.328, ce qui correspond à l'indice de réfraction de l'eau ;
- 1.355, ce qui correspond à l'indice de réfraction de l'éthanol ;
- 1.464, ce qui correspond à l'indice de réfraction du glycérol.

La réflectivité quantifie l'aptitude d'un cristal photonique à réfléchir la lumière qui lui est incidente. Il s'agit d'une grandeur normalisée, variant entre 0 et 1, la valeur de 1 correspondant à une réflexion totale. On observe que chaque fonction spectrale de réflectivité présente un minimum, qui correspond à un maximum de transmission, à une longueur d'onde de résonance bien précise. Lorsque l'échantillon est de l'eau (n = 1.328), la longueur d'onde de résonance est égale à 950 nm.

Ces simulations ont été réalisées en considérant un mode particulier de réalisation, selon lequel chaque cristal photonique, présente une structure telle que représentée sur la figure 4B. Une telle structure, dite à double période, comporte :

- des premiers trous $23_1$, d'un premier rayon $R_1$, et répartis selon un premier motif périodique $P_1$;
- des deuxièmes trous $23_2$, d'un deuxième rayon $R_2$, strictement inférieur au premier rayon $R_1$, et répartis selon un deuxième motif périodique $P_2$. Le deuxième motif périodique $P_2$ est, dans cet exemple, similaire au premier motif périodique $P_1$, en étant décalé par rapport à ce dernier.

Dans cet exemple le premier motif périodique $P_1$ et le deuxième motif périodique $P_2$ définissent une maille rectangulaire, de période a selon X et 2a selon Y, la maille rectangulaire étant reproduite selon deux directions de translation orthogonales. Dans cet exemple, les deux directions de translation correspondent respectivement à l'axe longitudinal X et à l'axe latéral Y. Le premier motif périodique $P_1$ et le deuxième motif périodique $P_2$ sont entrelacés, au sens ou selon une direction de translation, en l'occurrence la direction Y, on observe une alternance entre des lignes de premiers trous $23_1$, parallèles à l'axe longitudinal X, et des lignes de deuxièmes trous $23_2$, également parallèle à l'axe longitudinal X. Dans cet exemple, la période $a_1$ (selon X) du premier motif périodique $P_1$ est égale à la période $a_2$ (selon X) du deuxième motif périodique $P_2$, la période commune des deux motifs étant notée a. La valeur de la période est typiquement comprise entre 100 nm et 1 μm voire 2 μm. Dans cet exemple, la période a est égale à 300 nm. D'une façon générale, si λ est une longueur d'onde appartenant à la bande spectrale d'illumination Δλ, la période a est comprise entre λ/4 et λ.

Un avantage d'une structure résonante en double période est de pouvoir ajuster un décalage spatial δ entre le premier motif et le deuxième motif. Le décalage spatial correspond à une distance entre les lignes respectives des premiers et des deuxièmes trous. Sur la figure 4B, on a représenté deux structures différentes, correspondant respectivement à deux décalages spatiaux différents. Le décalage spatial permet de définir la position relative du deuxième motif par rapport au premier motif. Le recours à deux motifs décalés l'un par rapport l'autre permet un ajustement fin de la longueur d'onde de résonance. En effet, la longueur d'onde de résonance dépend de la position relative des premier et deuxième motifs.

A partir des fonctions spectrales représentées sur la figure 4A, on estime qu'une telle structure en double période permet d'obtenir des facteurs de qualité élevés, typiquement de l'ordre de 1000, soit une largeur à mi-hauteur du pic de 1 nm pour une longueur d'onde de résonance de 1000 nm.

Les courbes modélisées sur la figure 4A ont été obtenues en considérant :

- un premier rayon $R_1$ égal à 100 nm ;
- un deuxième rayon $R_2$ égal à 0,9 x $R_1$, soit 90 nm.
- une période a de 300 nm.
- une épaisseur de couche mince de 58 nm.

Le facteur de qualité dépend du rapport $R_2/R_1$. Lorsque $R_2/R_1$ est de l'ordre de 0.6 à 0.8, le facteur de qualité est égal à quelques dizaines. Lorsque $R_2/R_1$ tend vers 1, le facteur de qualité augmente rapidement. Le facteur de qualité peut alors dépasser plusieurs milliers.

D'une façon générale, le premier rayon $R_1$ est

inférieur à a/2. Le ratio $R_2/R_1$ est de préférence supérieur à 0.6, voire supérieur à 0.8. La période a peut varier entre 100 nm et 1 ou 2 $\mu$m, comme précédemment indiqué.

Sur la figure 4C, on a représenté une évolution de la longueur d'onde de résonance (axe des ordonnées, en nm) de différents cristaux photoniques tels que représentés sur la figure 4B. Sur la figure 4C, l'axe des abscisses est un identifiant de chaque cristal photonique considéré. Chaque double flèche recouvre des cristaux photoniques de même période $\alpha$, cette dernière variant entre 288 nm et 304 nm. On observe que la période a influence la longueur d'onde de résonance. Les points englobés par une même période $\alpha$ correspondent à différents décalages $\delta$ entre les deux motifs du cristal photonique. Les valeurs de décalage spatial $\delta$ considérées sont respectivement de 0 nm, 16 nm, 23 nm, 28 nm, 33 nm et 37 nm. Lorsque le décalage spatial $\delta$ est égal à 0, la distance entre un deuxième trou et chaque premier trou lui étant adjacent est égale à $\alpha$. On a estimé qu'un décalage spatial $\delta$ de 16 nm induit une variation de la longueur d'onde de résonance de 2 nm. On remarque que le décalage en longueur d'onde $d\lambda_k$ de résonance entre deux cristaux photoniques adjacents (décalage spectral) ne varie pas linéairement avec le décalage spatial $\delta$.

Ainsi, un autre avantage de la structure en double période, telle que précédemment décrite, est de permettre un ajustement de la longueur d'onde de résonance :

- en modifiant la période a des motifs, ce qui conduit à une variation relativement importante de la longueur d'onde de résonance, typiquement 10 nm lorsque la période a varie de 4 nm ;
- en modifiant le décalage spatial $\delta$ des deux motifs, ce qui conduit à une variation plus fine de la longueur d'onde de résonance, typiquement 2 nm pour un décalage spatial $\delta$ de 16 nm, dans l'exemple particulier de la géométrie décrite en lien avec la figure 4B.

Les valeurs quantitatives données dans le paragraphe précédent ont été obtenues par modélisation.

Les inventeurs ont fabriqué un support résonant de façon à procéder à des essais expérimentaux. Les caractéristiques du support résonant sont les suivantes :

- couche mince 22 : silicium - épaisseur 58 nm ;
- diamètre D de chaque cristal photonique : 100 $\mu$m ;
- rayon $R_1$ des premiers trous $23_1$ : $\alpha$ / 3
- rayon $R_2$ des deuxièmes trous $23_2$ : 0.9 $R_1$
- période $\alpha$ : variable entre 288 nm et 304 nm, avec des incréments de période $\Delta\alpha$ de 4 nm.
- décalage $\delta$ spatial du premier motif par rapport au deuxième motif : variable entre 0 nm, 16 nm, 23 nm, 28 nm, 33 nm et 37 nm. Ainsi, pour une même période $\alpha$, on peut obtenir 6 cristaux photoniques, chaque réseau présentant respectivement un décalage $\delta$ choisi parmi 16 nm, 23 nm, 28 nm, 33 nm et 37 nm.

Les figures 5A et 5B sont des vues de dessus de deux exemples de cristal photonique, présentant une même période et deux décalages spatiaux différents.

Les principales étapes de fabrication des cristaux photoniques sont décrites ci-dessous, en lien avec les figures 6A à 6M.

La figure 6A est un substrat de type SOI (Silicium sur isolant), comportant une couche supérieure 22 de Si, d'épaisseur 220 nm, s'étendant sur une couche intermédiaire 24 de SiO$_2$, dite couche BOX (acronyme de Buried Oxyde, signifiant oxyde enterré), d'épaisseur 2 $\mu$m, cette dernière s'étendant sur une couche support 25 de Si d'épaisseur 725 $\mu$m.

Afin d'obtenir une couche supérieure 22 de Si présentant l'épaisseur recherchée, cette dernière subit une oxydation thermique, puis attaque chimique à l'acide fluorhydrique pour enlever le SiO$_2$ résultant de façon à obtenir une couche 22 de Si d'épaisseur 58 nm ainsi qu'une couche 22' de SiO$_2$ d'épaisseur 80 nm sur la couche supérieure 22. Cette étape est schématisée sur la figure 6B.

La figure 6C schématise une application d'une résine R de photolithographie selon une épaisseur de 570 nm, sur la couche oxydée 22'. La résine est ensuite exposée à une insolation UV à travers un masque de photolithographie. Suite à l'insolation, la couche oxydée 22' et la couche supérieure 22 font l'objet d'une gravure de type RIE (Reactive Ion Etching), cette étape étant représentée sur la figure 6D. Cette étape permet de former des marques de photolithographie 19, dites marques premières PM, permettant un alignement d'une photolithographie postérieure par rapport aux marques premières. La résine est ensuite retirée, cf. figure 6E.

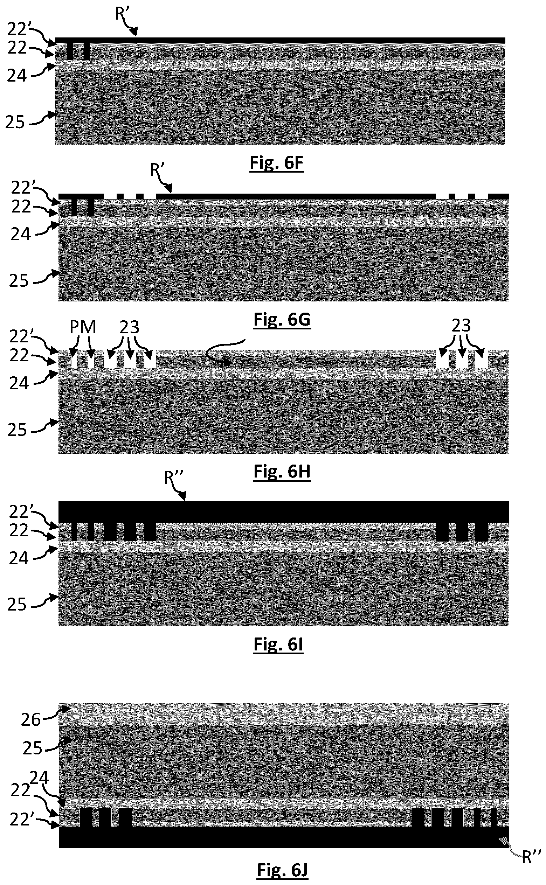

Les étapes représentées sur les figures 6F à 6H visent à former des trous 23 dans la couche supérieure 22, selon des motifs périodiques tels que précédemment décrits, de façon à former les cristaux photoniques $16_k$. Une résine de photolithographie R', d'épaisseur 300 nm, est déposée sur la couche oxydée 22' (cf. figure 6F). La résine de photolithographie comporte un revêtement antiréfléchissant désigné par l'acronyme Barc (Bottom Anti-Reflective Coating). Des zones de gravures sont délimitées, dans la résine R', par une insolation UV à travers un masque (cf. figure 6G). Les trous 23 sont formés à travers la couche oxydée 22' et la couche supérieure 22 par gravure RIE, puis la résine est retirée (cf. figure 6H).

Les étapes représentées sur les figures 6I à 6M sont des étapes de gravure en face arrière du substrat. Une résine R" est appliquée sur la couche oxydée 22', l'épaisseur étant de 1 $\mu$m (cf. figure 6I). La résine appliquée permet une protection de la face avant du substrat, de façon à permettre un amincissement de la couche support 25, réduisant l'épaisseur de 725 $\mu$m à 500 $\mu$m. Le substrat est alors retourné et une couche d'oxyde de silicium 26, faisant office de masque dur, est ajoutée sur la couche support (figure 6J). Une résine R''' est appliquée sur la couche 26, selon une épaisseur de 5 $\mu$m (cf.

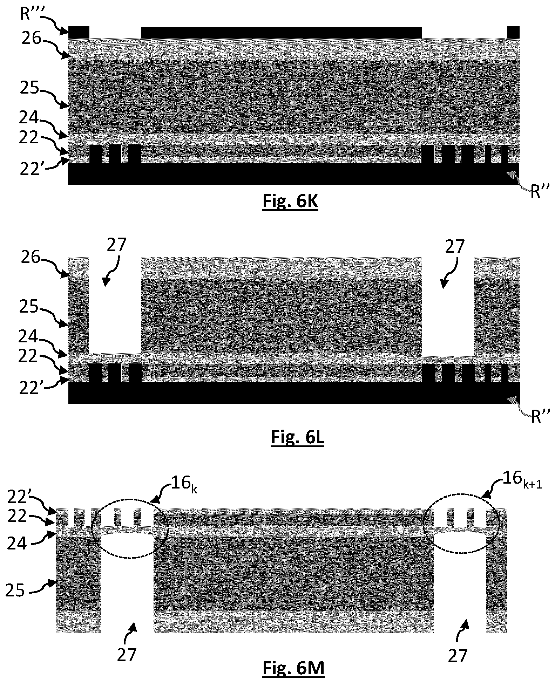

figure 6K). La résine R''' subit une insolation à travers un masque, de façon à délimiter des zones de gravure pour la formation de cavités 27 en face arrière du substrat. Le substrat subit ensuite une gravure (deep RIE) en face arrière, à travers la couche support 25, la couche intermédiaire 24 faisant office de couche d'arrêt de gravure. La figure 6L représente l'étape de gravure en face arrière. Cette étape permet de ménager des cavités en regard des trous 23 pratiqués à travers les couches 22 et 22'. Cette étape permet une formation de cristaux photoniques $16_k$, séparés les uns des autres, et portés par la couche intermédiaire 24, cette dernière formant une membrane en dessous de chaque cristal photonique. Le diamètre ou la diagonale D de chaque membrane peut être compris entre 50 $\mu$m et 500 $\mu$m. Il est par exemple égal à 100 $\mu$m. La résine R'' est ensuite retirée (figure 6M).

Dans le procédé de fabrication précédemment décrit, les trous 23 sont formés par photolithographie puis gravure, ce qui permet une fabrication collective de cristaux photoniques sur le support. Un tel procédé permet d'obtenir simultanément un grand nombre de cristaux photoniques, ce qui est favorable d'un point de vue économique. Alternativement, les trous peuvent être formés par un balayage à un faisceau électronique (e-beam), ce qui permet d'obtenir des géométries plus précises, au détriment du coût et de la rapidité de fabrication.

Des essais de caractérisation du support résonant 15 ainsi formé, et plus précisément des cristaux photoniques $16_k$, ont été réalisés. Pour cela, on a disposé une goutte d'eau sur un support résonant 15, et appliqué une lame de verre d'épaisseur 17 $\mu$m pour confiner la goutte d'eau. On a utilisé une source de lumière de type diode électroluminescente, centrée sur 940 nm, la bande spectrale d'illumination s'étendant à $\pm$ 40 nm par rapport à la longueur d'onde centrale de 940 nm. On a ensuite caractérisé la transmission de cristaux photoniques par des essais spectrométrie en transmission.

La figure 7A représente une fonction spectrale de transmission d'un cristal photonique. L'axe des ordonnées correspond au pourcentage de lumière réfléchie par le cristal photonique, l'axe des abscisses correspondant à la longueur d'onde. On observe bien une longueur d'onde de résonance en dessous de 950 nm, qui correspond à une résonance de Fano. On note la similitude entre les fonctions spectrales modélisées sur la figure 4A et la fonction spectrale obtenue expérimentalement, représentée sur la figure 7A, ce qui atteste de la validité des modélisations réalisées par les inventeurs.

Pour différents cristaux photoniques $16_k$ élaborés, d'autres essais, en réflectométrie, ont permis d'établir une longueur d'onde de résonance. La figure 7B est une comparaison entre les longueurs d'onde de résonance modélisées (points noirs) et expérimentales (points gris). Sur la figure 7B, l'axe des ordonnées correspond à la longueur d'onde (nm) tandis que l'axe des abscisses désigne la référence des cristaux photoniques testés. En dépit de la présence d'un décalage spectral, sensiblement constant, entre les longueurs d'onde de résonance modélisées et mesurées, on observe qu'il est possible de prévoir une série de cristaux photoniques, en l'occurrence 32 cristaux photoniques, disposés de façon adjacente, et entre lesquels le décalage $d\lambda_k$ de la longueur d'onde de résonance est en moyenne de l'ordre de 2 nm, entre 880 nm et 940 nm.

Un support résonant comportant de tels cristaux photoniques permet une identification d'une longueur d'onde de résonance dans une bande spectrale relativement étendue, de largeur spectrale typiquement supérieure à 50 nm, et dans cet exemple de largeur spectrale égale à 60 nm. Lorsque les cristaux photoniques sont alignés, comme représenté sur les figures 2A ou 3A, et couplés à un capteur d'image, l'image obtenue permet l'identification du cristal photonique transmettant une lumière d'intensité maximale. Ainsi, comme précédemment indiqué, le dispositif fonctionne de façon analogue à un spectromètre, la fonction de séparation spectrale étant assurée par le support résonant 15.

La figure 7C montre un extrait d'une image obtenue à l'aide d'un capteur d'image, le support résonant étant disposé selon la configuration représentée sur la figure 1A. L'image de la figure 7C représente l'intensité de la lumière transmise par chaque cristal photonique. Dans cet exemple, le support résonant n'est pas fonctionnalisé. Aussi, les cristaux photoniques alignés selon une même colonne, parallèlement à l'axe Y, produisent la même réponse spectrale. L'image de la figure 7C est intéressante car elle montre que selon l'axe X, l'intensité de la lumière transmise par les différents cristaux photoniques évolue. Le signal lumineux le plus intense, correspond au maximum d'intensité de l'onde d'illumination 11. Cette figure illustre la capacité de l'agencement des cristaux photoniques à effectuer une discrétisation spectrale de l'onde d'illumination 11.

Un support, réalisé selon le procédé précédemment décrit, a fait l'objet d'une utilisation en étant intégré à une chambre fluidique 18. Plus précisément, on a formé un capot amovible en PDMS (Polydiméthylsiloxane), pouvant être apposé sur le support de façon à former une chambre fluidique 18. On a successivement introduit différents liquides, notamment de l'eau et de l'éthanol, dans la chambre fluidique, au contact du support. Des essais en réflectométrie ont été réalisés. La figure 7D montre les courbes de réflectivité spectrale obtenues. On observe bien une variation $\delta\lambda$ de la longueur d'onde de résonance de Fano entre l'eau (en gris) et l'éthanol (en noir).

Selon une configuration avantageuse, représentée sur la figure 8A, formant une variante de la configuration représentée sur la figure 1B, un polariseur amont $17_1$ est disposé entre la source de lumière et l'échantillon, de façon à polariser l'onde lumineuse se propageant vers l'échantillon selon une direction non parallèle aux axes de périodicité des cristaux photoniques. La direction de polarisation du polariseur amont peut par exemple être de 45° par rapport à l'axe Y selon lequel est répété la période de chaque cristal photonique, comme représenté sur la figure 8B. Un polariseur aval $17_2$ est également disposé entre le support résonant et le capteur d'image. La direction de polarisation du polariseur aval est orientée de 90° par rapport à la direction de polarisation du polariseur amont, ce qui permet une détection dite en polarisation croisée. La figure 8B montre, par une ligne en pointillés, les directions de polarisation respectives du polariseur amont $17_1$ et du polariseur aval $17_2$. L'ajout de tels polariseurs permet d'éliminer la majeure partie de la lumière se propageant hors résonance jusqu'au capteur d'image. Cela permet d'augmenter le rapport signal à bruit de l'intensité de la lumière se propageant vers le capteur d'image à une longueur d'onde de résonance.

Le recours à une polarisation croisée, combinant un polariseur amont, en amont de l'échantillon, et un polariseur aval, en aval de l'échantillon, peut être prévue sur les modes de réalisation représentés sur les figures 1A (configuration sans lentille) et 1C (configuration en réflexion).

On a utilisé un support tel que décrit en lien avec les figures 4B et 4C. La figure 8C montre un spectre d'une onde lumineuse transmise par un cristal photonique. La figure 8C a été réalisée à l'aide d'un spectromètre. La figure 8C illustre la performance, en termes de rapport signal sur bruit, obtenue en mettant en oeuvre une polarisation croisée.

La figure 8D montre une image d'un support résonant tel que décrit en lien avec les figures 4B et 4C. Sur cette figure, le support résonant est matriciel, tel que décrit en lien avec la figure 3A. Aucune fonctionnalisation n'a été effectuée. Le support est utilisé dans une configuration en polarisation croisée, telle que décrite en lien avec la figure 8A. Le support est utilisé en contact avec de l'eau. On observe, sur chaque ligne, une distribution de l'intensité transmise par les différents cristaux photoniques.

La figure 8E montre un spectre de la source de lumière illuminant le support. Le spectre a été mesuré à l'aide d'un spectromètre. On a focalisé l'entrée d'un spectromètre face à chaque cristal photonique d'une même ligne. Les disques pleins montrent les résultats obtenus. On observe que les longueurs d'onde correspondant à chaque point sont cohérentes avec le spectre de la source. Les anneaux montrent une distribution de l'intensité d'une ligne de la figure 8D. La distribution de l'intensité est comparable avec la distribution spectrale formée par les différents points. La figure 8E illustre la capacité d'un dispositif selon l'invention à convertir une information de nature spectrale en information spatiale.

Les figures 9A à 9C illustrent une mise en oeuvre d'un support tel que précédemment décrit, selon la configuration en polarisation croisée. Sur cette figure, le support résonant est matriciel, tel que décrit en lien avec la figure 3A. Aucune fonctionnalisation n'a été effectuée. Les cristaux photoniques alignés selon une même colonne présentent la même longueur d'onde de résonance. La figure 9A montre une image du support mis en contact avec de l'eau. Comme décrit en lien avec la figure 8C, cette figure montre la capacité du dispositif à former une image représentative du spectre de l'onde lumineuse d'illumination 11. La figure 9A représente ainsi la fonction spectrale d'illumination $f$ discrétisée selon les différentes longueurs d'onde $\lambda_k$ de résonance des cristaux photoniques $16_k$. La figure 9B montre une image du support mis en contact avec de l'éthanol. Elle représente également la fonction spectrale d'illumination $f$ discrétisée selon les différentes longueurs d'onde de résonance des cristaux photoniques, ces dernières ayant été décalées sous l'effet de la variation d'indice de l'échantillon.

Du fait de la variation d'indice entre l'eau et l'éthanol, la longueur d'onde de chaque cristal photonique subit une variation spectrale $\delta\lambda$, en l'occurrence une diminution, ce qui se traduit par un léger décalage, vers la gauche de l'image, de la fonction spectrale d'illumination discrétisée. La figure 9C montre des profils d'intensité respectivement établis le long d'une ligne de cristaux photoniques de la figure 9A (en gris) et de la figure 9B (en noir). Ces profils permettent d'observer la variation spectrale $\delta\lambda$. Si la figure 9A forme une image de référence, la détermination de la variation spectral $\delta\lambda$ permet une estimation de la variation d'indice entre l'eau et l'éthanol.

L'invention pourra être utilisée pour la détection et la quantification d'un analyte dans des échantillons, par exemple dans le domaine de l'analyse biologique ou de l'aide au diagnostic médical. L'invention peut également être mise en oeuvre pour le contrôle de procédés industriels, par exemple dans l'agroalimentaire, ou encore dans le contrôle de l'environnement.

**Revendications**

1. Dispositif (1) d'analyse d'un échantillon, comportant une source de lumière (10), un capteur d'image (30) et un support résonant (15), disposé entre la source de lumière et le capteur d'image, de telle sorte que le capteur d'image est configuré pour acquérir une image (I) du support résonant, le support résonant étant destiné à être disposé au contact d'un échantillon (20), le support résonant comportant une surface présentant des cristaux photoniques ($16_k$), séparés les uns des autres, le support résonant étant tel que :

   - la source de lumière est configurée pour illuminer simultanément différents cristaux photoniques, dans une bande spectrale d'illumination s'étendant entre 200 nm et 1500 nm ;
   - une longueur d'onde de résonance ($\lambda_k$) est associée à chaque cristal photonique, de telle sorte que la transmission ou la réflexion de la lumière, par chaque cristal photonique, est maximale à la longueur d'onde de résonance à laquelle il est associé, les longueurs d'onde des cristaux photoniques définissant une bande spectrale de résonance ($\Delta\lambda_r$) ;
- au moins deux cristaux photoniques sont configurés pour être en contact avec un même analyte, présent dans l'échantillon, lesdits cristaux photoniques étant associés à deux longueurs d'onde de résonance différentes, la longueur d'onde de résonance associée à chaque cristal photonique dépendant d'une quantité d'analyte au contact du cristal photonique ;

le support résonant étant **caractérisé en ce que** chaque cristal photonique comporte :

- des premiers trous ($23_1$), ménagés à travers une couche mince (22) ayant une première dimension ($R_1$), la première dimension étant un rayon ou une diagonale, les premiers trous définissant un premier motif ;
- des deuxièmes trous ($23_2$), ménagés à travers la couche mince (22), ayant une deuxième dimension ($R_2$), la deuxième dimension étant strictement inférieure à la première dimension, les deuxièmes trous définissant un deuxième motif périodique ;
- le deuxième motif et le premier motif étant décalés l'un par rapport à l'autre, parallèlement à la surface du support, selon un décalage spatial variable entre au moins deux cristaux photoniques différents;

de telle sorte que la longueur d'onde de résonance associée à chaque cristal photonique dépend de la première dimension, de la deuxième dimension, et du décalage spatial.

2. Dispositif selon la revendication 1, dans lequel les cristaux photoniques, configurés pour être en contact avec un même analyte, sont alignés parallèlement à un même axe longitudinal (X), les longueurs d'onde de résonance respectivement associées à deux cristaux photoniques adjacents étant décalées selon un pas de discrétisation ($d\lambda_k$) compris entre 1 nm et 10 nm.

3. Dispositif selon l'une quelconque des revendications 1 à 2, dans lequel les cristaux photoniques, adressant un analyte, sont configurés pour capturer sélectivement le même analyte.

4. Dispositif selon la revendication 3, dans lequel le support résonant comporte

- des cristaux photoniques de rang 1, configurés pour capturer sélectivement un premier analyte ;
- des cristaux photoniques de rang j, configurés pour capturer sélectivement un $j^{ième}$ analyte, différent des analytes de rang inférieurs à j.

5. Dispositif selon la revendication 4, dans lequel :

- les cristaux photoniques de même rang sont alignés parallèlement à un axe longitudinal (X) ;
- et les cristaux photoniques associés selon une même longueur d'onde de résonance, en l'absence d'analyte, sont alignés parallèlement à un axe latéral (Y), l'axe latéral et l'axe longitudinal n'étant pas alignés.

6. Dispositif selon l'une quelconque des revendications 1 à 5 dans lequel, les cristaux photoniques s'étendent selon un plan de support ($P_{15}$), et la source de lumière (10) est configurée pour émettre une onde lumineuse d'illumination (11), dans la bande spectrale d'illumination, se propageant jusqu'au support résonant selon un axe de propagation (Z) perpendiculaire ou sensiblement perpendiculaire au plan de support.

7. Procédé d'analyse d'un échantillon (20), l'échantillon s'étendant sur le support résonant (15) d'un dispositif selon l'une quelconque des revendications 1 à 6, le procédé comportant les étapes suivantes :

a) illumination du support résonant par la source de lumière du dispositif dans la bande spectrale d'illumination ($\Delta\lambda$), la bande spectrale d'illumination recouvrant au moins en partie la bande spectrale de résonance ($\Delta\lambda_r$), de telle sorte que plusieurs cristaux photoniques adressant l'analyte sont simultanément illuminés, l'illumination étant telle que l'intensité d'illumination est variable, dans la bande spectrale de résonance, selon une fonction spectrale d'illumination (f);
b) acquisition d'une image (I) du support résonant, dite image de mesure, par le capteur d'image du dispositif, l'image comportant des régions d'intérêt ($ROI_k$) différentes, chaque région d'intérêt étant optiquement couplée à un cristal photonique ($16_k$) adressant l'analyte, de telle sorte que chaque région d'intérêt représente une intensité transmise ou réfléchie par chaque cristal photonique ($16_k$), lors de l'illumination du support résonant;
c) prise en compte d'une image de référence ($I_{ref}$), l'image de référence étant représentative d'une image acquise par le capteur d'image, lorsque le support résonant est illuminé dans la bande spectrale d'illumination ($\Delta\lambda$), dans une configuration de référence, en l'absence d'analyte, ou en présence d'une quantité connue d'analyte;
d) comparaison de l'image de mesure, acquise lors de l'étape b) avec l'image de référence, prise en compte lors de l'étape c);
e) en fonction de la comparaison, détermination de la présence de l'analyte dans l'échantillon ;.

8. Procédé selon la revendication 7, comportant, préalablement à l'étape a), une étape de formation de l'image de référence ($I_{ref}$), comportant :

- illumination du support résonant par la source de lumière, dans la bande spectrale d'illumination;
- acquisition d'une image du support résonant par le capteur d'image, l'image ainsi acquise formant l'image de référence, la quantité d'analyte au contact du support résonant étant considérée comme nulle.

9. Procédé selon l'une quelconque des revendications 7 ou 8, dans lequel l'image référence est une image obtenue en :

- illuminant, selon la bande spectrale d'illumination, un support de référence, considéré comme représentatif du support résonant illuminé dans l'étape a), la quantité d'analyte au contact du support de référence étant considérée comme nulle ;
- formant une image du support de référence, l'image ainsi formée correspondant à l'image de référence.

10. Procédé selon la revendication 9, dans lequel le support résonant comporte des cristaux photoniques de référence, considérés comme n'étant pas en contact avec l'analyte, et dans lequel l'image de référence est une image des cristaux photoniques de référence lorsqu'ils sont illuminés selon la bande spectrale d'illumination.

11. Procédé selon la revendication 10, dans lequel l'image de référence et l'image de mesure forment deux parties distinctes d'une même image acquise par le capteur d'image.

12. Procédé selon l'une quelconque des revendications 7 à 11, dans lequel pour chaque cristal photonique adressant l'analyte, la longueur d'onde de résonance dépend d'un indice de réfraction de l'échantillon, au niveau d'une interface entre l'échantillon et le cristal photonique, l'indice de réfraction variant en fonction de la quantité d'analyte au contact du cristal photonique.

13. Procédé selon l'une quelconque des revendications 7 à 12, dans lequel l'étape e) comporte les sous-étapes suivantes :

(i) à partir de l'image de mesure (I) détermination d'un profil, dit profil de mesure, de l'intensité des régions d'intérêt associées à l'analyte ;
(ii) à partir de l'image de référence ($I_{ref}$), détermination d'un profil, dit profil de référence, représentatif de l'intensité, en l'absence d'analyte ou en présence d'une quantité connue d'analyte dans l'échantillon, des régions d'intérêt associées à l'analyte ;

de telle sorte que la présence de l'analyte est déterminée en fonction d'une variation ($\Delta x$) du profil de mesure par rapport au profil de référence.

14. Procédé selon l'une quelconque des revendications 7 à 13, dans lequel l'étape e) comporte les sous-étapes suivantes :

(i) sur l'image de mesure, détermination d'une position, dite position de mesure, d'une région d'intérêt présentant une valeur d'intensité maximale parmi les régions d'intérêt associées à l'analyte ;
(ii) sur l'image de référence, détermination d'une position, dite position de référence, d'une région d'intérêt présentant une valeur d'intensité maximale parmi les régions d'intérêt associées à l'analyte ;

de telle sorte que la présence de l'analyte est déterminée en fonction d'une variation ($\Delta x$) de la position de mesure par rapport à la position de référence.

15. Procédé selon l'une quelconque des revendications 7 à 14 dans lequel l'étape e) comporte une estimation d'une quantité d'analyte dans l'échantillon, en fonction de la comparaison entre l'image de mesure et de l'image de référence.

**Patentansprüche**

1. Vorrichtung (1) zur Analyse einer Probe, aufweisend eine Lichtquelle (10), einen Bildsensor (30) und einen Resonanzträger (15), der zwischen der Lichtquelle und dem Bildsensor angeordnet ist, so dass der Bildsensor dazu ausgebildet ist, ein Bild (I) des Resonanzträgers zu erfassen, wobei der Resonanzträger dazu bestimmt ist, in Kontakt mit einer Probe (20) angeordnet zu sein, wobei der Resonanzträger eine Oberfläche umfasst, die photonische Kristalle ($16_k$) aufweist, die voneinander getrennt sind, wobei der Resonanzträger so beschaffen ist, dass:

- die Lichtquelle dazu ausgebildet ist, gleichzeitig verschiedene photonische Kristalle in einem Beleuchtungsspektralband zu beleuchten, das sich zwischen 200 nm und 1500 nm erstreckt;
- eine Resonanzwellenlänge ($\lambda k$) jedem photo-

nischen Kristall zugeordnet ist, so dass die Transmission oder die Reflexion des Lichts durch jeden photonischen Kristall auf der Resonanzwellenlänge maximal ist, welcher er zugeordnet ist, wobei die Wellenlängen der photonischen Kristalle ein Resonanzspektralband ($\Delta\lambda r$) definieren;

- wenigstens zwei photonische Kristalle dazu ausgebildet sind, mit ein und demselben Analyten in Kontakt zu stehen, der in der Probe vorhanden ist, wobei die photonischen Kristalle zwei verschiedenen Resonanzwellenlängen zugeordnet sind, wobei die Resonanzwellenlänge, die jedem photonischen Kristall zugeordnet ist, von einer Analytmenge abhängig ist, die mit dem photonischen Kristall in Kontakt steht; wobei der Resonanzträger **dadurch gekennzeichnet ist, dass** jeder photonische Kristall Folgendes aufweist:

- erste Löcher (231), die durch eine Dünnschicht (22) führen, die eine erste Abmessung (R1) aufweisen, wobei die erste Abmessung ein Radius oder eine Diagonale ist, wobei die ersten Löcher ein erstes Motiv definieren;
- zweite Löcher (232), die durch die Dünnschicht (22) führen, die eine zweite Abmessung (R2) aufweisen, wobei die zweite Abmessung streng kleiner als die erste Abmessung ist, wobei die zweiten Löcher ein zweites periodisches Motiv definieren;
- wobei das zweite Motiv und das erste Motiv um eine variable räumliche Verschiebung zwischen wenigstens zwei verschiedenen photonischen Kristallen parallel zur Oberfläche des Trägers bezogen aufeinander verschoben sind;

so dass die Resonanzwellenlänge, die jedem photonischen Kristall zugeordnet ist, von der ersten Abmessung, der zweiten Abmessung und der räumlichen Verschiebung abhängig ist.

2. Vorrichtung nach Anspruch 1, wobei die photonischen Kristalle, die dazu ausgebildet sind, mit ein und demselben Analyten in Kontakt zu stehen, parallel zu ein und derselben Längsachse (X) ausgerichtet sind, wobei die Resonanzwellenlängen, die jeweils zwei benachbarten photonischen Kristallen zugeordnet sind, um einen Diskretisierungsabstand ($d\lambda_k$) zwischen 1 nm und 10 nm verschoben sind.

3. Vorrichtung nach einem der Ansprüche 1 bis 2, wobei die photonischen Kristalle, die einen Analyten ansprechen, dazu ausgebildet sind, denselben Analyten selektiv einzufangen.

4. Vorrichtung nach Anspruch 3, wobei der Resonanzträger Folgendes aufweist

- photonische Kristalle 1. Ranges, die dazu ausgebildet sind, einen ersten Analyten selektiv einzufangen;
- photonische Kristalle j. Ranges, die dazu ausgebildet sind, einen j. Analyten selektiv einzufangen, der von den Analyten mit niedrigerem Rang als j verschieden ist.

5. Vorrichtung nach Anspruch 4, wobei:

- die photonischen Kristalle gleichen Ranges parallel zu einer Längsachse (X) ausgerichtet sind;
- und die photonischen Kristalle, die gemäß ein und derselben Resonanzwellenlänge zugeordnet sind, bei Nichtvorhandensein von Analyt parallel zu einer seitlichen Achse (Y) ausgerichtet sind, wobei die seitliche Achse und die Längsachse nicht auf einer Linie sind.

6. Vorrichtung nach einem der Ansprüche 1 bis 5, wobei sich die photonischen Kristalle in einer Trägerebene ($P_{15}$) erstrecken und die Lichtquelle (10) dazu ausgebildet ist, eine Beleuchtungslichtwelle (11) im Beleuchtungsspektralband auszusenden, die sich bis zum Resonanzträger entlang einer Ausbreitungsachse (Z) ausbreitet, die senkrecht oder im Wesentlichen senkrecht zur Trägerebene verläuft.

7. Verfahren zur Analyse einer Probe (20), wobei sich die Probe auf dem Resonanzträger (15) einer Vorrichtung nach einem der Ansprüche 1 bis 6 erstreckt, wobei das Verfahren die folgenden Schritte aufweist:

a) Beleuchten des Resonanzträgers durch die Lichtquelle der Vorrichtung im Beleuchtungsspektralband ($\Delta\lambda$), wobei das Beleuchtungsspektralband das Resonanzspektralband ($\Delta\lambda_r$) wenigstens teilweise abdeckt, so dass mehrere photonische Kristalle, die den Analyten ansprechen, gleichzeitig beleuchtet werden, wobei die Beleuchtung so geartet ist, dass die Beleuchtungsintensität im Resonanzspektralband gemäß einer spektralen Beleuchtungsfunktion (f) variabel ist;

b) Erfassen eines Messbilds (I) des Resonanzträgers durch den Bildsensor der Vorrichtung, wobei das Bild verschiedene Interessensbereiche ($ROI_k$) aufweist, wobei jeder Interessensbereich optisch an einen photonischen Kristall ($16_k$) gekoppelt ist, der den Analyten anspricht, so dass jeder Interessensbereich eine Intensität repräsentiert, die von jedem photonischen Kristall ($16_k$) bei der Beleuchtung des Resonanzträgers übertragen oder reflektiert wird;

c) Berücksichtigen eines Referenzbilds (Iref), wobei das Referenzbild für ein Bild repräsentativ ist, das vom Bildsensor erfasst wird, wenn der Resonanzträger im Beleuchtungsspektralband ($\Delta\lambda$) beleuchtet wird, in einer Referenzkonfiguration bei Nichtvorhandensein von Analyt oder bei Vorhandensein einer bekannten Analytmenge;

d) Vergleichen des bei Schritt b) erfassten Messbilds mit dem Referenzbild, das bei Schritt c) berücksichtigt wird;

e) je nach dem Vergleich, Bestimmen des Vorhandenseins des Analyten in der Probe.

8. Verfahren nach Anspruch 7, aufweisend vor dem Schritt a) einen Schritt des Bildens des Referenzbilds ($I_{ref}$), aufweisend:

   - Beleuchten des Resonanzträgers durch die Lichtquelle im Beleuchtungsspektralband;
   - Erfassen eines Bilds des Resonanzträgers durch den Bildsensor, wobei das so erfasste Bild das Referenzbild bildet, wobei die Analytmenge, die mit dem Resonanzträger in Kontakt steht, als null erachtet wird.

9. Verfahren nach einem der Ansprüche 7 oder 8, wobei das Referenzbild ein Bild ist, das durch Folgendes erhalten wird:

   - Beleuchten, gemäß dem Beleuchtungsspektralband, eines Referenzträgers, der als repräsentativ für den Resonanzträger erachtet wird, der im Schritt a) beleuchtet wird, wobei die Analytmenge, die mit dem Referenzträger in Kontakt steht, als null erachtet wird;
   - Bilden eines Bilds des Referenzträgers, wobei das so gebildete Bild dem Referenzbild entspricht.

10. Verfahren nach Anspruch 9, wobei der Resonanzträger photonische Referenzkristalle aufweist, die als nicht mit dem Analyten in Kontakt stehend erachtet werden, und wobei das Referenzbild ein Bild der photonischen Referenzkristalle ist, wenn sie gemäß dem Beleuchtungsspektralband beleuchtet werden.

11. Verfahren nach Anspruch 10, wobei das Referenzbild und das Messbild zwei gesonderte Abschnitte ein und desselben Bilds bilden, das vom Bildsensor erfasst wird.

12. Verfahren nach einem der Ansprüche 7 bis 11, wobei für jeden photonischen Kristall, der den Analyten anspricht, die Resonanzwellenlänge von einem Brechungsindex der Probe an einer Grenzfläche zwischen der Probe und dem photonischen Kristall abhängig ist, wobei der Brechungsindex je nach der Analytmenge variiert, die mit dem photonischen Kristall in Kontakt steht.

13. Verfahren nach einem der Ansprüche 7 bis 12, wobei der Schritt e) die folgenden Unterschritte aufweist:

    (i) anhand des Messbilds (I), Bestimmen eines Messprofils der Intensität der Interessensbereiche, die dem Analyten zugeordnet sind;
    (ii) anhand des Referenzbilds (Iref), Bestimmen eines Referenzprofils, das für die Intensität bei Nichtvorhandensein von Analyt oder bei Vorhandensein einer bekannten Analytmenge in der Probe repräsentativ ist, der Interessensbereiche, die dem Analyten zugeordnet sind;

    so dass das Vorhandensein des Analyten je nach einer Variation ($\Delta x$) des Messprofils im Verhältnis zum Referenzprofil bestimmt wird.

14. Verfahren nach einem der Ansprüche 7 bis 13, wobei der Schritt e) die folgenden Unterschritte aufweist:

    (i) auf dem Messbild, Bestimmen einer Messposition eines Interessensbereichs, der von den Interessensbereichen, die dem Analyten zugeordnet sind, einen maximalen Intensitätswert aufweist;
    (ii) auf dem Referenzbild, Bestimmen einer Referenzposition eines Interessensbereichs, der von den Interessensbereichen, die dem Analyten zugeordnet sind, einen maximalen Intensitätswert aufweist;

    so dass das Vorhandensein des Analyten je nach einer Variation ($\Delta x$) der Messposition im Verhältnis zur Referenzposition bestimmt wird.

15. Verfahren nach einem der Ansprüche 7 bis 14, wobei der Schritt e) ein Schätzen einer Analytmenge in der Probe je nach den Vergleich zwischen dem Messbild und dem Referenzbild aufweist.

## Claims

1. Device (1) for analysing a sample, comprising a light source (10), an image sensor (30) and a resonant holder (15), which is placed between the light source and the image sensor, such that the image sensor is configured to acquire an image (I) of the resonant holder, the resonant holder being intended to be placed in contact with a sample (20), the resonant holder comprising an area containing photonic crystals ($16_k$), which are separate from one another, the resonant holder being such that:

   - the light source is configured to simultaneously illuminate various photonic crystals, in a spectral band of illumination lying between 200 nm and 1500 nm;

- one resonant wavelength ($\lambda_k$) is associated with each photonic crystal, such that the transmission or reflection of the light, by each photonic crystal, is maximum at the resonant wavelength with which it is associated, the wavelengths of the photonic crystals defining a spectral band of resonance ($\Delta\lambda_r$);

- at least two photonic crystals are configured to make contact with the same analyte present in the sample, said photonic crystals being associated with two different resonant wavelengths, the resonant wavelength associated with each photonic crystal depending on an amount of analyte in contact with the photonic crystal;

the resonant holder being **characterized in that** each photonic crystal comprises:

- produced through a thin layer (22), first holes ($23_1$) that have a first dimension ($R_1$), the first dimension being a radius or a diagonal, the first holes defining a first pattern;
- produced through the thin layer (22), second holes ($23_2$) that have a second dimension ($R_2$), the second dimension being strictly smaller than the first dimension, the second holes defining a second periodic pattern;
- the second pattern and the first pattern are offset with respect to each other, parallel to the surface of the holder, by a spatial offset that is variable between at least two different photonic crystals;

such that the resonant wavelength associated with each photonic crystal depends on the first dimension, on the second dimension, and on the spatial offset.

2. Device according to Claim 1, wherein the photonic crystals that are configured to make contact with the same analyte are aligned parallel to the same longitudinal axis (X), the resonant wavelengths respectively associated with two adjacent photonic crystals being offset by a discretization pitch ($d\lambda_k$) comprised between 1 nm and 10 nm.

3. Device according to either one of Claims 1 and 2, wherein the photonic crystals addressing an analyte are configured to selectively capture the same analyte.

4. Device according to Claim 3, wherein the resonant holder comprises

- photonic crystals of rank 1 that are configured to selectively capture a first analyte;

- photonic crystals of rank j that are configured to selectively capture a $j^{th}$ analyte that is different from the analytes of rank lower than j.

5. Device according to Claim 4, wherein:

- the photonic crystals of the same rank are aligned parallel to a longitudinal axis (X);
- and the photonic crystals associated with the same resonant wavelength, in the absence of analyte, are aligned parallel to a lateral axis (Y), the lateral axis and the longitudinal axis not being aligned.

6. Device according to any one of Claims 1 to 5, wherein the photonic crystals lie in a holder plane ($P_{15}$), and the light source (10) is configured to emit, in the spectral band of illumination, an illuminating light wave (11) that propagates to the resonant holder along a propagation axis (Z) that is perpendicular or substantially perpendicular to the holder plane.

7. Method for analysing a sample (20), the sample lying on the resonant holder (15) of a device according to any one of Claims 1 to 6, the method comprising the following steps:

a) illuminating the resonant holder with the light source of the device, in the spectral band of illumination ($\Delta\lambda$), the spectral band of illumination at least partially covering the spectral band of resonance ($\Delta\lambda_r$), such that a plurality of photonic crystals addressing the analyte are simultaneously illuminated, the illumination being such that the illumination intensity is variable, in the spectral band of resonance, according to a spectral illumination function (f);

b) acquiring, with the image sensor of the device, an image (I) of the resonant holder, which image is referred to as the measurement image, the image comprising different regions of interest ($ROI_k$), each region of interest being optically coupled to one photonic crystal ($16_k$) addressing the analyte, such that each region of interest represents an intensity transmitted or reflected by each photonic crystal ($16_k$), while the resonant holder is illuminated;

c) taking into account a reference image ($I_{ref}$), the reference image being representative of an image acquired by the image sensor, when the resonant holder is illuminated in the spectral band of illumination ($\Delta\lambda$), in a reference configuration, in the absence of analyte, or in the presence of a known amount of analyte;

d) comparing the measurement image, acquired in step b), with the reference image, taken into account in step c);

e) depending on the comparison, determining whether the analyte is present in the sample.

8. Method according to Claim 7, comprising, prior to step a), a step of forming the reference image ($I_{ref}$), comprising:

- illuminating the resonant holder with the light source, in the spectral band of illumination;
- acquiring an image of the resonant holder with the image sensor, the image thus acquired forming the reference image, the amount of analyte in contact with the resonant holder being considered to be zero.

9. Method according to either one of Claims 7 and 8, wherein the reference image is an image obtained by:

- illuminating, in the spectral band of illumination, a reference holder, that is considered to be representative of the resonant holder illuminated in step a), the amount of analyte in contact with the reference holder being considered to be zero;
- forming an image of the reference holder, the image thus formed corresponding to the reference image.

10. Method according to Claim 9, wherein the resonant holder comprises reference photonic crystals that are considered not to make contact with the analyte, and wherein the reference image is an image of the reference photonic crystals when they are illuminated in the spectral band of illumination.

11. Method according to Claim 10, wherein the reference image and the measurement image form two distinct parts of the same image acquired by the image sensor.

12. Method according to any one of Claims 7 to 11, wherein, for each photonic crystal addressing the analyte, the resonant wavelength depends on a refractive index of the sample, at an interface between the sample and the photonic crystal, the refractive index varying as a function of the amount of analyte making contact with the photonic crystal.

13. Method according to any one of Claims 7 to 12, wherein step e) comprises the following sub-steps:

(i) on the basis of the measurement image (I), determining a profile, referred to as the measurement profile, of the intensity of the regions of interest associated with the analyte;
(ii) on the basis of the reference image ($I_{ref}$), determining a profile, referred to as the reference profile, representative of the intensity, in the absence of analyte or in the presence of a known amount of analyte in the sample, of the regions of interest associated with the analyte;

such that whether the analyte is present is determined depending on a variation ($\Delta x$) in the measurement profile with respect to the reference profile.

14. Method according to any one of Claims 7 to 13, wherein step e) comprises the following sub-steps:

(i) in the measurement image, determining a position, referred to as the measurement position, of a region of interest exhibiting a maximum intensity value among the regions of interest associated with the analyte;
(ii) in the reference image, determining a position, referred to as the reference position, of a region of interest exhibiting a maximum intensity value among the regions of interest associated with the analyte;

such that whether the analyte is present is determined depending on a variation ($\Delta x$) in the measurement position with respect to the reference position.

15. Method according to any one of Claims 7 to 14, wherein step e) comprises estimating an amount of analyte in the sample, depending on the comparison between the measurement image and the reference image.

**Fig. 1A**

1

10

11

18

20

21

Z
X

15

16k

Δ

P15

14

12

d

P30

30 31

32k   32k   32k   32k

42

40   41

**Fig. 1B**

**Fig. 1C**

**Fig. 1D**

**Fig. 2A**

**Fig. 2B**

**Fig. 2C**

$\lambda_{ref,1}$    $I_{ref}$          $\lambda_{ref,k}$              $\lambda_{ref,K}$

$d\lambda_k$

**Fig. 2D**   $ROI_k$

$\Delta x$

$\lambda_1$    $I$          $\lambda_k$            $\lambda_K$

**Fig. 2E**

$\lambda'_1$           $\lambda'_k$           $\lambda'_K$

**Fig. 2F**

$\delta\lambda$

$\delta\lambda'$

$\lambda$

**Fig. 2G**

| 100 | → | 110 | → | 120 | $I$ → | 130 | $\delta\lambda$ → | 140 |

$I_{ref}$

| 115 |

| 150 |

**Fig. 2H**

**Fig. 3A**

**Fig. 3B**

**Fig. 3C**

**Fig. 4A**

**Fig. 4B**

**Fig. 4C**

Fig. 5A

Fig. 5B

22
24
25

**Fig. 6A**

22'
22
24
25

**Fig. 6B**

R
22'
22
24
25

**Fig. 6C**

PM    R
22'
22
24
25

**Fig. 6D**

22'
22
24
25

**Fig. 6E**

22'
22
24

R'

25

**Fig. 6F**

22'
22
24

R'

25

**Fig. 6G**

22'
22
24

PM    23

23

25

**Fig. 6H**

22'
22
24

R''

25

**Fig. 6I**

26

25

22 24
22'

R''

**Fig. 6J**

R'''
26
25
24
22
22'

**Fig. 6K**

R''

26
27
25
24
22
22'
27

R''

**Fig. 6L**

22'
22
24
25

16_k
16_{k+1}
27
27

**Fig. 6M**

**Fig. 7A**

**Fig. 7B**

**Fig. 7C**

**Fig. 7D**

10

$17_1$

1

11

18

20

21

Z X

15

16k

$\Delta$

$17_2$

12

30 31

$32_k$   $32_k$   $32_k$   $32_k$

**Fig. 8A**

Y

X

$17_1$

Y

X

$17_2$

**Fig. 8B**

Fig. 8C

Fig. 8D

Fig. 8E

Fig. 9A

Fig. 9B

Pixels

Fig. 9C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 13905727 B
- WO 2016151249 A
- WO 2018060589 A
- US 20170082975 A
- WO 02059602 A
- US 2004155309 A

**Littérature non-brevet citée dans la description**

- **BOUGOT-ROBIN K et al.** A multispectral résonant waveguide nanopatterned chip for robust oil quality monitoring. *sensors and actuators B : chemical,* 15 Avril 2015, vol. 216, 221-228
- **CHENG F. et al.** Tuning asymmetry parameter of Fano résonance of spoof surface plasmons by modes coupling. *Applied Physics Letters,* 26 Mars 2012, vol. 100 (3